(19) Europäisches Patentamt
European Patent Office
Office européen des brevets

(11) **EP 2 815 497 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(21) Anmeldenummer: **13703803.0**

(22) Anmeldetag: **08.02.2013**

(51) Int Cl.:
*H02M 7/49* (2007.01)　　　*H02M 7/487* (2007.01)

(86) Internationale Anmeldenummer:
**PCT/EP2013/052568**

(87) Internationale Veröffentlichungsnummer:
**WO 2013/120784 (22.08.2013 Gazette 2013/34)**

(54) **NETZEINSPEISEVORRICHTUNG, ENERGIEEINSPEISESYSTEM SOWIE VERFAHREN ZUM BETRIEB EINER NETZEINSPEISEVORRICHTUNG**

GRID FEED APPARATUS, ENERGY FEED SYSTEM AND METHOD FOR OPERATING A GRID FEED APPARATUS

DISPOSITIF D'ALIMENTATION RÉSEAU, SYSTÈME D'ALIMENTATION EN ÉNERGIE ET PROCÉDÉ DE FONCTIONNEMENT D'UN DISPOSIF D'ALIMENTATION RÉSEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2012 DE 102012101156**

(43) Veröffentlichungstag der Anmeldung:
**24.12.2014 Patentblatt 2014/52**

(73) Patentinhaber: **LTI REENERGY GMBH 59423 Unna (DE)**

(72) Erfinder:
• **BACH-PRECKWINKEL, Heiko 44309 Dortmund (DE)**
• **BUENTE, Andreas 33378 Rheda-Wiedenbrueck (DE)**

(74) Vertreter: **Spachmann, Holger Stumpf Patentanwälte PartGmbB Alte Weinsteige 73 70597 Stuttgart (DE)**

(56) Entgegenhaltungen:
EP-A1- 2 192 679　　US-A1- 2011 141 786

• GRIVA G ET AL: "Flexible synchronous PWM control of cascaded inverters for photovoltaic generation", INDUSTRIAL ELECTRONICS (ISIE), 2010 IEEE INTERNATIONAL SYMPOSIUM ON, IEEE, PISCATAWAY, NJ, USA, 4. Juli 2010 (2010-07-04), Seiten 832-837, XP031802967, ISBN: 978-1-4244-6390-9
• GABRIELE GRANDI ET AL: "Control strategy for a multilevel inverter in grid-connected photovoltaic applications", ELECTRICAL MACHINES AND POWER ELECTRONICS, 2007. ACEMP '07. INTERNATIONAL AEGEAN CONFERENCE ON, IEEE, PISCATAWAY, NJ, USA, 10. September 2007 (2007-09-10), Seiten 156-161, XP031248013, ISBN: 978-1-4244-0890-0
• GRANDI G ET AL: "Dual inverter configuration for grid-connected photovoltaic generation systems", TELECOMMUNICATIONS ENERGY CONFERENCE, 2007. INTELEC 2007. 29TH INTERNATIONAL, IEEE, PISCATAWAY, NJ, USA, 30. September 2007 (2007-09-30), Seiten 880-885, XP031228950, ISBN: 978-1-4244-1627-1
• GRIVA G ET AL: "Dual inverters with synchronized PWM for grid-connected photovoltaic systems", CLEAN ELECTRICAL POWER, 2009 INTERNATIONAL CONFERENCE ON, IEEE, PISCATAWAY, NJ, USA, 9. Juni 2009 (2009-06-09), Seiten 420-425, XP031517613, ISBN: 978-1-4244-2543-3

EP 2 815 497 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- GRIVA G ET AL: "Synchronously modulated cascaded neutral-clamped converters for photovoltaic application", POWER ELECTRONICS ELECTRICAL DRIVES AUTOMATION AND MOTION (SPEEDAM), 2010 INTERNATIONAL SYMPOSIUM ON, IEEE, PISCATAWAY, NJ, USA, 14. Juni 2010 (2010-06-14), Seiten 809-814, XP031727606, ISBN: 978-1-4244-4986-6

- VALENTIN OLESCHUK ET AL: "Cascaded neutral-clamped inverters with flexible synchronized PWM for photovoltaic installations", INDUSTRIAL ELECTRONICS (ISIE), 2011 IEEE INTERNATIONAL SYMPOSIUM ON, IEEE, 27. Juni 2011 (2011-06-27), Seiten 989-993, XP032019198, DOI: 10.1109/ISIE.2011.5984294 ISBN: 978-1-4244-9310-4

## Beschreibung

STAND DER TECHNIK

Die vorliegende Erfindung betrifft eine Netzeinspeisevorrichtung zur Einspeisung elektrischer Energie einer Gleichspannungs-Energiequelle in ein Wechseloder Drehstrom-Versorgungsnetz, wobei die Gleichspannung eines DC Zwischenkreises mittels zumindest einer Wechselrichtereinheit in eine Wechsel-/ oder Drehspannung umgewandelt und mittels einer Transformatoreinrichtung, in ein AC-Versorgungsnetz eingespeist wird. In nebengeordneten Aspekten betrifft die Erfindung ein Energieeinspeisesystem zur Einspeisung von Gleichspannung einer Photovoltaikquelle, einer Brennstoffzelle, einer Akkumulatorquelle oder eines AC-Generators mit nachgeschaltetem Gleichrichter in ein AC-Versorgungsnetz, ein Betriebsverfahren zum Betrieb einer derartigen Netzeinspeisevorrichtung sowie die Verwendung einer Netzeinspeisevorrichtung zum Betrieb eines AC-Verbrauchers, insbesondere eines AC-Motors. Grundsätzlich kann die erfindungsgemäße Vorrichtung auch für die umgekehrte Energieflussrichtung eingesetzt werden, so dass ein DC-Verbraucher mit einer einstellbaren Zwischenkreisspannung versorgt werden kann.

Aus dem Stand der Technik sind Netzeinspeisevorrichtungen bekannt für die elektrische Energie von Gleichspannungsquellen wie Batterien, Akkumulatoren, Photovoltaikzellen, Brennstoffzellen oder ähnlichen Gleichspannungsquellen in Wechsel- oder Drehstromenergie umgewandelt und in ein Versorgungsnetz eingespeist werden können. Üblicherweise wird hierzu eine einzelne Wechselrichtereinheit eingesetzt, wobei die maximale dreiphasige Drehstromausgangsspannung durch die zur Verfügung gestellte DC-Spannung der Gleichspannungsenergiequelle begrenzt ist. Beispielsweise wird die DC-Spannung bei Photovoltaikeinspeisesystemen durch die Spannung am Maximum Power Point (MPP) der Solarzellenanordnung bestimmt, d.h. dem Punkt des Strom-/Spannungsdiagramms einer Solarzelle, an dem die größte Leistung entnommen werden kann, d.h. an dem das Produkt von Strom und Spannung einen Maximalwert einnimmt, und der von Betriebsart und -typ einer Solarzelle abhängt. Einen optimalen Wirkungsgrad bei dem Einsatz von Photovoltaikzellen lässt sich bei Ausnutzung der Spannung am MPP und des entsprechenden Stromes erreichen, wobei andererseits eine hohe Flexibilität der Spannungsgestaltung im DC-Zwischenkreis einer Netzeinspeisevorrichtung erwünscht ist. Da eine möglichst hohe AC-Spannung zur Einspeisung in das Versorgungsnetz eine Verringerung der Stromhöhe bewirkt und aus Gründen des Wirkungsgrades, der Baugröße und der Kosten der beteiligten Komponenten wünschenswert ist, so dass durch eine hohe DC-Zwischenkreisspannung die Ströme bei gleicher Leistung entsprechend verringert und damit die Komponenten langlebiger, günstiger und kleiner dimensioniert werden können, ist es erstrebenswert, die abgebbare AC-Spannung in Abhängigkeit der Höhe der DC-Zwischenkreisspannung zu maximieren.

Bei den aus dem Stand der Technik bekannten dreiphasigen Wechselrichtereinheiten wird ein Transformator aus einem dreiphasigen Wechselrichter versorgt, wobei in der Regel für die maximale Drehstromspannung im Photovoltaikbereich die folgende Relation gilt:

$$U_{AC} < U_{MPPmin} / \sqrt{2} \cdot 0.9,$$

mit $U_{MPPmin}$ als minimaler Spannung am MPP der Solarzelle, wobei eine 10 % Reserve für die Regelung und den Toleranzausgleich vorgesehen ist und eine dritte harmonische Nullkomponente in die Modulation injiziert wird. Typischerweise wird bei einer Anwendung im Photovoltaikbereich eine minimale DC-Zwischenkreisspannung von 450 V bereitgestellt, so dass sich eine maximale Ausgangsspannung von ca. 290 V als verkettete Drehstromspannung ergibt. Eine derartige Drehstromspannung reicht nicht aus, um ohne weiteres in ein typisches 400 V Drehstromnetz einzuspeisen, so dass der netzseitige Transformator, ein Hochsetzsteller oder andere Maßnahmen zur Spannungsanpassung verwendet werden müssen. Somit ergibt sich beispielsweise bei einem 100 kW-System die Notwendigkeit, dass alle wechselspannungsseitigen bzw. verbrauchernetzseitigen Komponenten, d.h. Transformator, Filter, Drosseln, Endstufen auf bis zu 200 A Netzstrom, d.h. einer vergleichbar hohen Strombelastung, ausgelegt werden müssen, was die Einspeiseschaltung entsprechend teuer und aufwendig und ineffizienter macht. Üblicherweise führt zudem die hohe Leerlaufspannung von Photovoltaikzellen dazu, dass Halbleiter der nächsthöheren Spannungsklasse im Wechselrichter eingesetzt werden müssen, da es ansonsten nicht möglich ist, bei der sich ergebenden hohen Zwischenkreisspannung den Wechselrichter zu modulieren.

Die drei Konferenzbeiträge GRIVA G. et. al.: "Flexible synchronous PWM control of cascaded inverters for photovoltaic generation", INDUSTRIAL ELECTRONICS (ISIE) Conferene, 2010 IEEE, INTERNATIONAL SYMPOSIUM ON, IEEE, PISCATAWAY, NJ, USA, 4. July 2010 (2010-07-04), Seiten 832-837; GRIVA G. et. al.: "Dual inverters with synchronized PWM for grid-connected photovoltaic systems", CLEAN ELECTRICAL POWER 2009, INTERNATIONAL CONFERENCE ON. IEE-E. PISCATAWAY. NJ. USA, 9 June 2009 (2009-06-09). Seiten 420-425, ISBN: 978-1-4244-2543-3 und GRIVA G ET AL: "Synchronously modulated cascaded neutral-clamped converters for photovoltaic application", POWER ELECTRONICS ELECTRICAL DRIVES AUTOMATION AND MOTION (SPEEDAM). 2010 INTERNATIONAL SYMPOSIUM ON. IEEE, PISCATAWAY. NJ. USA, 14 June 2010 (2010-06-14), Seiten 809-814, ISBN: 978-1-4244-4986-6 offenbaren jeweils eine Doppelwechselrichterschaltung mit Transformator, wobei ein synchroner Betrieb der beiden Wechselrichter gegeben ist, und die Phasen der Schaltfrequenzen variieren.

In dem Konferenzbeitrag GABRIELE GRANDI ET AL: "Control strategy for a multilevel inverter in grid-connected photovoltaic applications", ELECTRICAL MACHINES AND POWER ELECTRONICS, 2007. ACEMP '07. INTERNATIONAL AEGEAN CONFERENCE ON. IEEE. PISCATAWAY. NJ. USA, 10 September 2007 (2007-09-10), Seiten 156-161, ISBN: 978-1-4244-0890-0 werden zwei Inverter mit gleichen Frequenzen betrieben.

Gattungsgemäße Netzeinspeisevorrichtungen sind aus dem Konferenzbeitrag GRANDI G. ET AL: "Dual inverter configuration for grid-connected photovoltaic generation systems", TELECOMMUNICATIONS ENERGY CONFERENCE, 2007. INTELEC 2007, 29TH INTERNATIONAL, IEEE. PISCATAWAY. NJ. USA, 30 September 2007 (2007-09-30), Seiten 880-885, ISBN: 978-1-4244-1627-1 und VA-LENTIN OLESCHUK ET AL: "Cascaded neutral-clamped inverters with flexible synchronized PWM for photovoltaic installations", INDUSTRIAL ELECTRONICS (ISIE). 2011 IEEE, INTERNATIONAL SYMPOSIUM ON. IEEE, 27 June 2011 (2011-06-27). Seiten 989-993, ISBN: 978-1-4244-9310-4 bekannt.

Das Schaltverhalten bisher bekannter Wechselrichtertopologien zur Netzeinspeisung über einen Netztransformator verursacht Oberwellen in den Ausgangsphasen, die die Primärwicklungen eines Netztransformators ansteuern, die hohe Verluste im Transformator bewirken und eine stark oberwellenbehaftete Spannung ins Netz einspeisen. Die Verluste führen zu unerwünschter Erwärmung und Verringern den Wirkungsgrad der Netzeinspeiseschaltung. Durch eine hohe Verlustleistung wird die Lebensdauer der Schaltung herabgesetzt. Daher werden häufig aufwändige Netz- bzw. Sinusfilter am Ausgang der Wechselrichter eingesetzt, die relativ teuer sind, eine große Baugröße aufweisen und die Fehleranfälligkeit und Kosten der Netzeinspeiseschaltung erhöhen.

Ausgehend von dem oben genannten Stand der Technik ist es die Aufgabe der Erfindung, die Nachteile der bekannten Verfahren zu verringern.

Die oben genannten Nachteile werden durch eine Vorrichtung, ein Verfahren sowie eine Verwendung einer Netzeinspeisevorrichtung nach den unabhängigen Ansprüchen gelöst. Vorteilhafte Weiterbildungen der Erfindung sind Gegenstand der abhängigen Ansprüche.

OFFENBARUNG DER ERFINDUNG

In einem ersten erfinderischen Aspekt wird eine Netzeinspeisevorrichtung zur Einspeisung elektrischer Energie zumindest einer DC-Energiequelle in ein Wechsel- oder Drehstromversorgungsnetz vorgeschlagen, wobei die Gleichspannung eines DC-Zwischenkreises mittels zumindest einer Wechselrichtereinheit in eine Wechsel-/ oder Drehspannung umgewandelt und, mittels einer Transformatoreinrichtung, die drei Netztransformatorwicklungen umfasst, in ein AC-Versorgungsnetz eingespeist wird. Hierzu wird erfindungsgemäß vorgeschlagen, dass ein erster Wicklungsanschluss der Netztransformatorwicklung an eine Halbbrücke einer ersten Wechselrichtereinheit und ein zweiter Wicklungsanschluss der Netztransformatorwicklung der Transformatoreinrichtung an eine Halbbrücke einer zweiten Wechselrichtereinheit angeschlossen wird. Durch den Betrieb der Netztransformatorwicklungen zwischen den Halbbrücken zweier Wechselrichtereinheiten kann der gesamte DC-Zwischenkreisspannungsbereich ausgenutzt werden, um DC-Spannung in eine Drehspannung umzuwandeln. Durch den Betrieb der primärseitigen Transformatorwicklungen an den beiden Wechselrichtereirichtungen können diese mit einer Amplitude der über eine Schaltperiode gemittelten Ausgangsspannung von DC+ bis DC- betrieben werden. Würde diese Wicklung alternativ nach dem Stand der Technik mit einer Wechselrichtereinheit betrieben, so steht bei einer Sternschaltung pro Wicklung nur die über eine Schaltperiode gemittelte Amplitude $(DC+ - DC-)/\sqrt{3}$ zur Verfügung und bei einer Dreieckschaltung muss die Wechselrichtereinheit einen um den Faktor $\sqrt{3}$ größeren Strom liefern als die Wicklung der Transformatoreinrichtung aufnimmt. Diese erhöhten Ströme oder abgesenkten Spannungen können bei der erfindungsgemäßen Vorrichtung vermieden werden, so dass die AC-Ausgangsspannung um den Faktor $\sqrt{3}$ erhöht werden kann.

Erfindungsgemäß wird hierdurch vorgeschlagen einen Transformator mit separat herausgeführten Primärwicklungsanschlüssen zu benutzen, so dass in der Transformatoreinrichtung insbesondere eine, bevorzugt drei unabhängige Potentiale durch die getrennten Transformatorwicklungen mit sechs Anschlüssen nach außen zugänglich sind. Die jeweils ersten Anschlüsse der Primärwicklungen der Transformatoreinrichtung werden mit einem ersten Wechselrichter verbunden, die zweiten Anschlüsse der jeweiligen Primärwicklungen werden an einen zweiten Frequenzumrichter angeschlossen. Durch eine koordinierte Ansteuerung der beiden Wechselrichtereinheiten kann beispielsweise der MPP-Spannungsbereich einer Solarzellenanordnung flexibel ausgenutzt werden, um die maximale Generatorleistung auszunutzen. Hierdurch wird die Netzeinspeiseleistung der DC-Energieeinspeisequelle optimiert. Durch die erfindungsgemäße Vorrichtung kann eine maximal hohe AC-Ausgangsspannung bereitgestellt werden, so dass die entsprechenden Leistungshalbleiterbauteile für eine geringere Strombelastung ausgelegt werden können, d.h. kleiner dimensioniert und damit kostengünstiger hergestellt werden können. Die geringeren Ströme in den Wechselrichtereinheiten führen zu reduzierten Durchlass- und Schaltverlusten und verbessern den Wirkungsgrad der Einspeisevorrichtung. Durch die erfindungsgemäße Doppelwechselrichtertopologie können die Spannungspotentiale der Ausgangsphasen L1U, L1V und L1W der ersten Wechselrichtereinheit und Ausgangsphasen L2U, L2V und L2W der zweiten Wechselrichtereinheit unabhängig voneinander in feineren Stufen geschaltet werden, wodurch sich geringere Spannungshübe ergeben und der Oberwellenanteil und die damit verbundenen Verluste gesenkt werden können. Die Ausgangsspannung nähert sich einem sinusförmigen Verlauf an.

Weiterhin erfindungsgemäß ist die erste Wechselrichtereinheit in einer netzsynchronen Taktung, insbesondere 50 Hz oder 60 Hz zur Vorgabe der Polarität der abzugebenden Versorgungsnetzspannung betreibbar, und die zweite Wechselrichtereinheit in einer höherfrequenten PWM-Taktung (Puls Width Modulation), insbesondere größer 500 Hz, bevorzugt mindestens 4 kHz zur Modulation betreibbar. Denkbar und vorteilhaft sind auch Schaltfrequenzen von 8 kHz, 16 kHz oder höher. In dieser Weiterbildung wird vorgeschlagen, dass die erste Wechselrichtereinheit die Polarität der abzugebenden Versorgungsnetzspannung, d.h. positive oder negative Halbwelle vorgibt und dabei netzsynchron mit der gewünschten Versorgungsnetzfrequenz, üblicherweise 50 Hz oder 60 Hz bzw. beim Antrieb eines Motors mit der gewünschten Motordrehzahl betrieben wird. Die zweite Wechselrichtereinheit wird höherfrequent, beispielsweise um den Faktor 10 bis 100 getaktet, und gibt PWM-Signale zur Ausformung einer gewünschten Signalform der Versorgungsnetzspannung, insbesondere einer sinusförmigen Signalform ab. Diese dienen zur Modulation und Anpassung der ausgegebenen Spannung an die Netzspannung oder die gewünschte Spannungsform. Es fallen in der ersten Wechselrichtereinheit nur geringe Schaltverluste an, so dass die Auslegung des Kühlsystems und der Halbleiter mit kostengünstigeren Elementen erfolgen kann. Alternativ können beide Wechselrichtereinheiten mit einer höherfrequenten PWM-Taktung, insbesondere größer 500 Hz, bevorzugt 4 kHz zur Modulation der abzugebenden Versorgungsnetzspannung betrieben werden. In diesem Fall kann die Qualität der abgegeben Ausgangsspannung weiter verbessert werden, insbesondere bei einer um eine halbe Taktperiode verschobenen Taktung der beiden Wechselrichtereinheiten. Durch den hochfrequenten Schaltbetrieb der zweiten Wechselrichtereinheit kann die Ausgangsphasenspannung zwischen den zugeordneten Phasen L1U-L2U, L1V-L2V und L1W-L2W wesentlich näher an einen Sinusspannungsverlauf angepasst werden, wodurch Oberwellen weiterhin reduziert, Trafo- und Schaltverluste gesenkt und die Lebensdauer verlängert werden kann. Die bereitgestellte Netzeinspeisespannung nähert sich deutlich einem idealen Sinusverlauf an. Hierdurch können auf aufwändige Sinusfilter verzichtet werden, was Kosten und Platzaufwand spart, und die Fehleranfälligkeit herabsetzt. Stattdessen können kostengünstige LC-Filter- und Glättungseinheiten in den Ausgangsphasen der Wechselrichtereinheiten zu den Primärwicklungen der Transformatoreinrichtung eingesetzt, oder ganz auf Filtermaßnahmen verzichtet werden. Aufgrund der höheren Spannungen und verringertem Strom einer Doppelgegenüber einer Einfachwechselrichtertopologie kann die Filter- und Glättungseinheit für geringere Stromstärken ausgelegt werden.

Gemäß einer vorteilhaften Weiterbildung der Erfindung kann die Transformatoreinrichtung ein Dreiphasentransformator mit von außen zugänglichen und trennbaren Primärwicklungsanschlüssen sein, wobei die beiden Anschlussklemmen jeder Primärwicklung von außen anschließbar sind, und jeder Primärwicklung eine Glättungskondensator und eine Filterinduktivität vorgeschaltet ist. In dieser Weiterbildung wird vorgeschlagen, dass der üblicherweise vorhandene Sternpunkt der Primärwicklungen auftrennbar ist, so dass jede Primärwicklung von außen zugänglich anschließbar ist. Somit können die jeweiligen ersten Anschlussklemmen mit der ersten Wechselrichtereinheit und der zweite Anschluss jeder Primärwicklung mit der zweiten Wechselrichtereinheit verbunden werden. Jeder Primärwicklung ist eine Glättungseinheit vorgeschaltet, die üblicherweise einen Filterkondensator und eine Filterinduktivität umfasst, um die abgegebenen grundsätzlich binären Schaltsignale der Wechselrichtereinheiten in eine harmonische sinusförmige Schwingung umzuwandeln, in dem die gespeicherten magnetischen und elektrischen Energien des Kondensators und der Induktivität zur Glättung der PWM-Signale dienen. Hierdurch kann durch die Auftrennung eines Sternpunktes einer aus dem Stand der Technik bekannten Transformatoreinrichtung diese für den Anschluss an eine erfindungsgemäße Netzeinspeisevorrichtung vorgesehen werden. Je nach Auslegung des Transformators kann ggf. auf die Filtereinrichtung verzichtet werden, bzw. es kann ggf. auch sekundärseitig eine Filtereinrichtung zugeschaltet werden.

Es ist empfehlenswert, dass im DC-Zwischenkreis zwischen der zumindest einen DC-Energiequelle und den beiden Wechselrichtereinheiten eine Zwischenkreiskapazität eingeschaltet wird, die in der Lage ist, die DC-Zwischenkreisspannung zu glätten und zu stabilisieren. Diese verbessert die Stabilität der DC-Zwischenkreisspannung, verringert Oberwellen und verringert Störverluste.

Bei einem Einfachwechselrichter- und auch Doppelwechselrichterbetrieb mit zwei Wechselrichtereinheiten an einer einzelnen DC Energiequelle können im Betrieb Oberwellen und unerwünschte Kreisströme zwischen den Ausgangsphasen der Wechselrichtereinheit auftreten, die die Strombelastung und Verluste erhöhen. Eine höhere Strombelastung und der Oberwellenanteil senkt die Lebensdauer der Schaltungsanordnung, und die Verluste erfordern zum einen einen erhöhten Kühlungsaufwand der Leistungselemente und der Transformatoreinrichtung, erfordern zum anderen höhere Kabel- und Kontaktquerschnitte und senken den Gesamtwirkungsgrad der Schaltungsvorrichtung. Letztlich werden hierdurch leistungsstärkere Schaltungselemente benötigt, die erhöhten Bauraum und größere Kosten nach sich ziehen. Letztlich entspricht die Netzeinspeisespannung keinem idealen Sinusverlauf, so dass es zu Störungen im Stromnetz kommt.

Gemäß einer vorteilhaften Ausführungsform kann zwischen den Wechselrichtereinheiten und der Transformatoreinrichtung, insbesondere vor jeder Primärwicklung eine Filter- und Glättungseinheit vorgeschaltet sein, die bevorzugt zumindest einen Filterkondensator und zumindest eine Filterinduktivität umfasst. Die Filter- und Glättungseinheit dient dazu, den Oberwellenanteil deutlich zu reduzieren und Kreisströme zu unterdrücken, um somit den Wirkungsgrad und die Lebensdauer der Schaltungsanordnung zu erhöhen und die Ausgangsspannung einem idealen Sinusverlauf anzunähern. Die Filter- und Glättungseinheit kann bevorzugt in den Zuleitungen zu den Transformatorwicklungen der Transformatoreinrichtung eingeschaltet sein, und ist insbesondere dazu ausgelegt, Gleichtaktströme zu unterdrücken und hochfrequente Schwingungen zu dämpfen. Durch die Verwendung eines einfachen LC-Glieds als Filterschaltung kann auf komplexe Netz- bzw. Sinusfilter mit einer Vielzahl passiver Bauteile wie X- und Y-Kondensatoren verzichtet werden.

Gemäß einer vorteilhaften Ausführungsform kann zu jeder Primärwicklung eine Filterinduktivität der Filter- und Glättungseinheit in Reihe angeordnet sein. Die Filterinduktivität kann an in einer Ausgangsphase der ersten oder zweiten Wechselrichtereinheit eingeschaltet sein, und kann zur Unterdrückung von Oberwellen dienen, da die Induktivität für hohe Frequenzen einen erhöhten Widerstand bildet.

Aufbauend hierauf kann des Weiteren die Filterinduktivität zwei Drosseln umfassen, die in der Hin- und Rückleitungsphase L1U- L2U, L1V-L2V, L1W-L2W der Primärwicklung eingeschaltet werden. So kann die vorgenannte Filterinduktivität in zwei Drosseln aufgeteilt sein, und in die beiden zueinander korrespondierenden Ansteuerphase der beiden Wechselrichtereinheiten eingeschaltet sein, wodurch grundsätzlich eine einfache Parallelschaltung von Wechselrichtereinheiten zur Leistungserhöhung bzw. Leistungsskalierung realisierbar wird.

Wiederum aufbauend hierauf können die Drosseln der Filterinduktivität der Hin- und Rückleitungsphasen L1U-L2U, L1V-L2V, L1W-L2W stromkompensiert ausgeführt sein. Dies kann beispielsweise dadurch erreicht werden, dass die Spule der Hin- und Rückleitung auf einen gemeinsamen Spulenträger gegenphasig gewickelt sind, so dass sich die Magnetfelder von Hin- und Rückleitung aufheben, allerdings Gleichtaktanteile ein hohes Magnetfeld und somit einen hohen Widerstand bewirken, wodurch ineffiziente Kreisströme stark gedämpft und eine verlustarme Parallelschaltung von Wechselrichtereinheiten erreicht werden können.

In der vorgeschlagenen Filter- und Glättungseinheit ist grundsätzlich jeder Primärwicklung der Transformatoreinrichtung eine Filterinduktivität zugeordnet. Die zumindest drei Filterinduktivitäten können vorteilhafterweise gemeinsam auf einem mehrschenkligen, insbesondere dreischenkligen Spulenträger aufgewickelt werden, wodurch zum einen die magnetischen Kreise der Stromflüsse miteinander in vorteilhafterweise verknüpft werden können, zum anderen ein einzelnes, platzsparendes Induktivitätsbauelement bereitgestellt werden kann, das mit geringen Raumabmessungen in einer Baueinheit einer Doppelwechselrichtereinrichtung integriert werden kann.

Somit können nach den vorherigen Ausführungsformen die Filter- und Glättungseinheit vorteilhafterweise für jede Phase L2U, L2V, L2W eine einphasige Drossel oder für Hin- und Rückleitungsphasen L1U-L2U, L1V-L2V, L1W-L2W eine aufgeteilte und bevorzugt stromkompensierte Drossel sein. Bevorzugt kann die stromkompensierte Drossel eine mehrschenklige Filterdrossel zur stromkompensierten Dämpfung von Kreisströmen zwischen den Wechselrichtereinheiten umfassen. Eine stromkompensierte Drossel weist mehrere gleiche Wicklungen auf, die gegensinnig von Strom durchflossen werden, so dass sich die ausbildenden Magnetfelder von Hin- und Rückleitung kompensieren können, um Störströme zu eliminieren. Ein Gleichtaktstrom, der durch Kreisströme beim Parallelbetrieb zweier Wechselrichtereinheiten an einer einzelnen DC-Spannungsquelle verursacht werden kann, bildet in der stromkompensierten Drossel allerdings eine hohe Induktivität aus, die dämpfend wirkt, bzw. einen hohen Widerstand gegenüber den Kreisströmen ausbildet. Hierzu ist es wünschenswert, dass die stromkompensierte Drossel eine hohe Streuinduktivität ausbildet, dies kann durch den vorteilhaften dreischenkligen Aufbau der magnetfeldführenden Spulenkörper, der zumeist aus geblechten Metallscheiben besteht, erreicht werden, wobei die Hin- und Rückleitungen der Drehstromphasen beider Wechselrichtereinheiten L1U-L2U, L1V,-L2V, L1W-L2W jeweils paarweise über einen Schenkel geführt sind. Die Streuinduktivität reduziert den Effekt von Oberwellen aufgrund der Schalteffekte der Wechselrichtereinheiten und dämpft störende Kreisströme.

Gemäß einer vorteilhaften Ausführungsform können zwei oder mehrere Wechselrichtereinheiten parallel geschaltet und synchron betrieben zu einer Wechselrichtereinheit zusammengefasst sein, wobei die synchronisierten Ausgangsphasen L11U & L12U, L11V & L12V, L11W & L12W, L21U & L22U, L21V & L22V und L21W & L22W über Drosseln, bevorzugt über eine mehrschenklige Drossel zur Unterdrückungen von Oberwellen und Reduktion von Kreisströmen miteinander gekoppelt sein können. So können vorgenannte einphasige Drosseln auf die Hin- und Rückleitung der Transformatoreinrichtung aufgeteilt sein, d.h. jeweils eine Drossel in den L1U, L1V und L1W Zweig, der die erste Wechselrichtereinheit mit der Transformatoreinrichtung verbindet, eingeschaltet sein, und eine korrespondierende Drossel in den L2U, L2V und L2W Zweig, der die zweite Wechselrichtereinheit mit der Transformatoreinrichtung verbindet, eingeschaltet sein. Hierdurch wird es möglich, zwei oder mehrere Wechselrichtereinheiten parallel zu einer Wechselrichtereinheit zu verschalten, und diese parallel zu betreiben, ohne dass zusätzliche Schaltungsmaßnahmen zum Schutz der Wechselrichtereinheiten erforderlich sind. Somit ist eine kostengünstige Kaskadierung zur Vergrößerung der Einspeiseleistung gegeben, wobei ein vorher angesprochener dreischenkliger Aufbau der Drossel mit ausgeprägten Streuinduktivitäten eine kompakte Bauweise ermöglicht. Die erforderliche Induktivität des LC-Gliedes kann auf zwei Drosseln aufgeteilt sein, die vorteilhafterweise auf jeweils einem Schenkel eines dreischenkligen Spulenjochs angeordnet sein können. Schließlich ist es bei einem Parallelbetrieb vorteilhaft und sinnvoll, die PWM-Taktung der parallel geschalteten Wechselrichtereinheiten jeder Wechselrichtereinheit zu synchronisieren, sei es durch eine parallele Verdrahtung der Schaltleitungen der in der Wechselrichtereinheit eingesetzten Halbleiterschaltelemente, sei es durch eine synchronisierte Taktung der den beiden parallel geschalteten Wechselrichtereinheiten zugeordneten PWM-Steuereinheiten (Pulsweitenmodulation-Steuereinheiten).

Gemäß einer vorteilhaften Ausführungsform des Parallelbetriebs von Wechselrichtereinheiten können zumindest die Wechselrichtereinheiten einer Doppelwechselrichtereinrichtung und die zugeordneten ausgangsseitigen Filter- und Glättungseinheiten, d.h. Filterinduktivitäten- und kapazitäten der LC-Stufe in einer gemeinsamen Baueinheit einer Doppelwechselrichtereinrichtung zusammengefasst sein. Dies ermöglicht es, zwei oder mehrere derartige Doppelwechselrichtereinrichtungen parallel zu schalten, wobei die jeweiligen Ausgangsphasen L1U, L1V, L1W und L2U, L2V und L2W der in den Doppelwechselrichtereinrichtungen umfassten beiden Wechselrichtereinheiten miteinander verbunden sind. Die Filterinduktivitäten ermöglichen hierbei wesentlich den Parallelbetrieb und unterdrücken Kreisströme. Durch die bauliche Integration der Wechselrichtereinheiten in einer Doppelwechselrichtereinrichtung kann eine kompakte und kostengünstige Skalierbarkeit erreicht werden. Durch entsprechende Schaltmittel kann bedarfsweise ein Doppelrichter parallel geschaltet werden, wobei sich auch eine hohe Fehlerredundanz ergibt und die Abgabeleistung skaliert werden kann.

Gemäß einer vorteilhaften Weiterbildung kann zumindest die zweite Wechselrichtereinheit eine 3-stufige oder höherstufige Wechselrichtereinheit mit Mittelpunkt sein. Eine solche 3- oder höherstufige Wechselrichtereinheit ermöglicht die Abgabe von zumindest drei verschiedenen Spannungshöhen in jeder Polaritätsrichtung zwischen beiden Wechselrichtereinheiten, d.h. eine Nullspannung, eine Zwischenspannung und eine maximale Spannung nahe der Spannungshöhe des DC-Zwischenkreises in positiver und negativer Richtung, so dass zumindest fünf verschiedene Spannungshöhen abgegeben und damit eine feinere Dosierung der PWM-Signale und verbesserte Qualität der abzugebenden AC-Spannung erreicht werden kann. Solch eine 3-Level Wechselrichtereinheit verbessert den Wirkungsgrad. Beide Wechselrichtereinheiten teilen sich dabei in der Regel einen Zwischenkreiskondensator. Zur Festlegung einer Nullspannung umfasst die 3-Stufen Wechselrichtereinheit einen Mittelpunkt, wenn es sich z. B. um eine 3-Stufen-Wechselrichtereinheit vom NPC-Typ handelt (Neutral point clamped three level inverter), der eine definierte Nullspannung zur Verfügung stellen kann. Denkbar und weiterhin vorteilhaft ist allerdings auch der Einsatz einer mehrstufigen Wechselrichtereinheit, die allerdings entsprechend teuer und mit einem hohen regeltechnischen Aufwand betreibbar ist.

Alternativ zu einer 3- oder höherstufigen Wechselrichtereinheit mit Standard-Leistungshalbleitern (IGBT-Schalttransistoren) können zur Umsetzung der hohen PWM-Taktfrequenzen ein Zweipunkt-, Dreipunkt- oder höherstufige Wechselrichtereinheit mit Schaltelementen eingesetzt werden, die deutlich geringere Durchlass- und/oder Schaltverluste aufweisen, z.B. 2-Punkt oder 3-Punkt Wechselrichtereinheiten auf Basis von Siliziumcarbid-Halbleiterbauelementen (SiC) oder Galliumarsenid- Halbleiterbauelementen (GaAs). Diese können in einem höherfrequenten Schaltbetrieb gegenüber der netzsynchron betriebenen Wechselrichtereinheit ebenfalls die angestrebten Vorteile der Erfindung umsetzen, insbesondere besitzen diese Art von Leistungshalbleiterbauelementen sehr geringe Schaltverluste und geringe Durchlasswiderstände.

Ausgehend von dem obigen Ausführungsbeispiel kann nach einer vorteilhaften Weiterbildung im DC-Zwischenkreis zwischen der zumindest einen DC-Energiequelle und den beiden Wechselrichtereinheiten jeweils eine Zwischenkreiskapazität zwischen positiven bzw. negativen Zwischenkreispotential und dem Zwischenkreismittelpunkt geschaltet sein. Somit wird vorgeschlagen, dass zwei getrennte Zwischenkreiskapazitäten zwischen positivem Zwischenkreispotential und dem Mittelpunkt und zwischen negativem Zwischenkreispotential und dem Mittelpunkt eingeschaltet sind, um eine verbesserte Glättung des DC-Zwischenkreispotentials und eine spannungsstabile Abgabe von Spannungen der 3-Stufen Wechselrichtereinheit bereitstellen zu können. Beide Wechselrichtereinheiten sind mit demselben DC-Zwischenkreis verbunden. Die Auslegung der gemeinsamen Zwischenkreiskapazität kann gegenüber der Summe von zwei separaten DC-Zwischenkreisen reduziert werden und so eine Kostenersparnis erzielt werden.

In einer vorteilhaften Weiterbildung kann an den ersten und/oder zweiten Wicklungsanschlüssen der Netztransformatorwicklungen eine Schalteinrichtung zur Entkopplung von der Wechselrichtereinheit und/oder zur Stern- und/oder Dreieckschaltung der Wicklungsanschlüsse vorgesehen sein. Eine Entkopplungsschalteinrichtung trennt die Wicklungsanschlüsse von der entsprechenden Wechselrichtereinheit, beispielsweise im Fall eines Defektes der Wechselrichtereinheit oder einem Zusammenbruch der DC-Versorgungsspannung der Wechselrichtereinheit. Um die Transformatoreinrichtung weiter betreiben zu können, werden die Wicklungsanschlüsse in einer Sternschaltung mittels einer Sternschalteinrichtung miteinander verbunden, oder mittels einer Dreieckschalteinrichtung im Dreieck verschaltet. Hiermit kann eine Redundanz geschaffen und damit die Ausfallsicherheit der Netzeinspeisevorrichtung erhöht werden. In einer Sternschaltung werden die an eine der Wechselrichtereinheiten angeschlossenen Wicklungs- anschlüsse kurzgeschlossen. Der zugehörige Wechsel- richter wird dabei entweder galvanisch von den Wicklungsanschlüssen getrennt oder es ist sicherzustellen, dass die entsprechende Wechselrichtereinheit kurz vor und während des Kurzschließens nicht moduliert. Somit wird die Transformatoreinrichtung in eine Sternschaltung überführt. Dies ist bei hohen Zwischenkreisspannungen, welche zeitweilig in etwa bei Photovoltaikgeneratoren durch das MPP-Tracking auftreten vorteilhaft. Durch das Umschalten in eine Sternschaltung entfallen die Verluste der kurzgeschlossenen Wechselrichtereinheit, so dass der Gesamtwirkungsgrad der Netzeinspeisevorrichtung weiter erhöht werden kann. Ebenfalls vorteilhaft ist dieses Kurzschließen, falls der zugehörige Wechselrichter wegen eines Defektes ausfällt, denn durch diese Maßnahme ist ein Weiterbetreiben der Anlage möglich. Das Kurzschließen der Primärwicklungsenden an der Wechselrichtereinheit kann insbesondere mittels Schützen, Relais oder elektronischen Schaltern vorgenommen werden. Bei einer Dreieckschaltung insbesondere mittels Schützen, Relais oder elektronischen Schaltern werden die Wicklungen in Reihe geschaltet. In diesem Fall arbeitet zeitweise nur eine der beiden Wechselrichtereinheit, welche mit Halbleitern einer höheren Spannungsfestigkeit ausgerüstet ist. In diesem Betriebsfall kann die Netzeinspeisevorrichtung mit Zwischenkreisspannungen betrieben werden, die ggf. nicht für die zweite Wechselrichtereinheit geeignet ist. Dies löst zum Beispiel das Problem der hohen Leerlaufspannungen der Photovoltaikgeneratoren.

In einer vorteilhaften Weiterbildung kann die erste Wechselrichtereinheit mit einer ersten DC-Energiequelle und die zweite Wechselrichtereinheit mit einer zweiten DC-Energiequelle verbunden sein. Hierdurch können Wechselrichtereinheiten mit geringer Leistungsauslegung zur Einspeisung einer höheren Leistung verwendet werden. Falls eine der beiden DC-Energiequellen ausfällt, kann die zweite weiterhin zur Netzversorgung mit verringerter Leistung zur Verfügung stehen. Es wird eine erhöhte Redundanz und Ausfallsicherheit erreicht. Somit werden die beiden Wechselrichtereinheiten in einer Konfiguration verschaltet, in der jeder Wechselrichtereinheit jeweils eine separate DC-Quelle oder DC- Verbraucher und eine separate Zwischenkreiseinheit zugeordnet ist. Die beiden Wechselrichtereinheiten sind auf der DC-Seite durch maximal eine Verbindung miteinander verbunden. In dieser Konfiguration können zwei DC-Quellen, wie z.B. Photovoltaikgeneratoren, Akkumulatoren oder Brennstoffzellen separat voneinander betrieben und deren Arbeitspunkt eingestellt werden. Insbesondere zwei Photovoltaikgeneratoren können somit unabhängig bezüglich ihres MPP-Punktes optimiert werden.

In einem nebengeordnetem Aspekt wird ein Energieeinspeisesystem vorgeschlagen, dass eine DC-En- ergiequelle, beispielsweise eine Photovoltaikenergie- quelle, eine Brennstoffzellenenergiequelle eine Akkumu- latorenergiequelle, einen mechanisch antreibbaren Ge- nerator mit Wechselrichter und eine Netzeinspeisevorrichtung nach einem der vorgenannten Ausführungsbeispiele umfasst. Hierbei kann die DC-Energiequelle eine Photovoltaikquelle, eine Brennstoffzellenquelle, eine Akkumulatorquelle oder ein Generator, bevorzugt ein Synchrongenerator sein. Insbesondere beim Betrieb als Photovoltaikenergiequelle ist es möglich, einen erhöhten Wirkungsgrad durch Betrieb an der MPP-Spannung zu ermöglichen, bei dem die höchste Leistung der Photovoltaikzelle erreichbar ist.

In einem weiteren nebengeordneten Aspekt der Erfindung wird ein Verfahren zum Betrieb einer Netzeinspeisevorrichtung vorgeschlagen, bei dem der erste und die zweite Wechselrichtereinheit derart abgestimmt schalten, dass die auf jede Primärspule der Transformatoreinrichtung einwirkende Spannung auf eine Amplitude von 0 V bis zum Zwischenkreispotential DC+/DC- einstellbar ist. So kann zwischen der ersten und zweiten Wechselrichtereinheit eine über eine Schaltperiode gemittelte Spannungsamplitude bereitgestellt werden, die sich einstellbar zwischen Null und der DC-Zwischenkreisspannung bewegt. Der gesamte Spannungshub des Zwischenkreises steht für die Modulation der jeweiligen Halbwelle zur Verfügung. Besonders vorteilhaft ist dabei ein hochfrequenter Betrieb der zweiten Wechselrichtereinheit zur Modulation der abzugebenden AC- Spannung.

Ausgehend von dem vorgenannten Verfahren kann es vorteilhaft sein, dass die erste Wechselrichtereinheit zur Vorgabe der Polarität der abzugebenden Ver- sorgungsnetzspannung netzfrequenzsynchron, insbe- sondere in einer 50 Hz oder 60 Hz Taktung bzw. in einer Taktung entsprechend der Motordrehzahl betrieben wird, und die zweite Wechselrichtereinheit mit einer höherfrequenten, insbesondere in einem Bereich von in der Regel mindestens zehnfach höherfrequenten PWM- Taktung, insbesondere größer 500 Hz, bevorzugt mindestens 4 kHz zur Modulation der abzugebenden Versorgungsnetzspannung betrieben wird. Dabei bieten sich Modulationsfrequenzen von 8 kHz, 16kHz oder höher an. Somit gibt die erste Wechselrichtereinheit die Polarität der als positiver oder negativer Halbwelle abzugebenden AC-Spannung vor, während die zweite Wechselrichtereinheit durch PWM-Modulation eine Modulation eines abzugebenden sinusförmigen AC-Spannungsverlaufs vornehmen kann. Hierzu ist es günstig, dass die zweite Wechselrichtereinheit hochfrequent, insbesondere mit 4 kHz, 8 kHz oder 16 kHz Taktfrequenz geschaltet wird, um möglichst wenig Oberwellen zu erzeugen und einen harmonischen Verlauf der AC-Spannung bereit zu

stell en.

In einer weiteren vorteilhaften Ausbildung des oben genannten Verfahrens kann zumindest die zweite Wechselrichtereinheit in zumindest drei Spannungsstufen zur PWM-Modulation der Versorgungsnetzspannung geschaltet werden. Hierzu wird die zweite Wechselrichtereinheit als 3-Stufen oder Mehrstufen Wechselrichtereinheit realisiert, um eine möglichst genaue und exakte Beeinflussung der abzugebenden AC-Spannung zu erreichen. Hierdurch wird der Formfaktor der abzugebenden Wechselspannung hinsichtlich einer idealen Sinusschwingung verbessert, Oberwellen reduziert und hierdurch gepaart mit einer geringeren Strombelastung und geringeren Schaltverlusten der Wirkungsgrad insgesamt erhöht, so dass kleinere, günstigere und langlebigere Halbleiter-, Transformatorbauteile, Leitungen, Filter und Kühlkörper eingesetzt werden können.

In einem weiteren Aspekt betrifft die Erfindung die Verwendung einer Netzeinspeisevorrichtung zur Ankopplung einer Photovoltaikquelle, einer Brennstoffzellenquelle, einer Akkumulatorquelle oder eines mechanisch antreibbaren Generators mit Gleichrichter, bevorzugt eines Synchrongenerators an ein AC-Versorgungsnetz oder zum Antrieb eines AC-Verbrauchers, insbesondere eines AC-Motors, wobei bevorzugt die Ansteuerung der Wechselrichtereinheit frequenzvariabel entsprechend der Drehzahl des AC-Motors erfolgt. Dabei bietet es sich an, die vorgenannte Netzeinspeisevorrichtung zum Betrieb eines synchronen oder asynchronen Drehstrommotors einzusetzen, wobei je nach Leistung und Drehzahl, die vom AC-Motor abzugeben ist, entsprechend frequenzvariabel erste und zweite Wechselrichtereinheit zu betreiben sind. Im günstigsten Falle wird dabei die erste Wechselrichtereinheit entsprechend der abzugebenden Drehfrequenz des Motors und die zweite Wechselrichtereinheit höherfrequent beispielhaft um den Faktor 10 bis 100 höhergetaktet als die erste Wechselrichtereinheit zur Modulation der abzugebenden AC-Spannung betrieben. Hierdurch werden ein verbesserter Wirkungsgrad, geringere Schaltverluste und eine effiziente Ausnutzung des Spannungspotentials des DC-Zwischenkreises erreicht.

Bei der Verwendung einer vorgenannten Netzeinspeisevorrichtung ist eine sekundärseitige direkte Energieeinspeisung in ein Mittelspannungsnetz von 1-30 kVolt besonders vorteilhaft. In Kleinspannungsnetzen wird in der Regel kein Transformator eingesetzt, die Einspeisung erfolgt direkt. In Hochspannungsnetzen wird in der Regel nicht direkt von DC-Energiequellen eingespeist, diese werden zunächst in einem Mittelspannungsnetz verschaltet, um eine genügend hohe Energiekapazität zu sammeln. Daher ist ein bevorzugter Verwendungsbereich der vorgeschlagenen Erfindung eine Einspeisung in ein Mittelspannungsnetz, in dem die Transformatoren die entsprechenden Eigenschaften aufweisen.

ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    eine Schaltungsskizze einer Netzeinspeisevorrichtung nach dem Stands der Technik;

Fig. 2    eine Schaltskizze eines ersten Ausführungsbeispiels der Erfindung für ein Dreiphasen Drehstromnetz;

Fig. 3    ein weiteres Ausführungsbeispiel für ein Dreiphasenversorgungsnetz;

Fig. 4    Signalverläufe der Ausgangsspannungen und Schaltsignale für ein Ausführungsbeispiel der Erfindung;

Fig. 5    ein weiteres Ausführungsbeispiel für eine erfindungsgemäße Netzeinspeisevorrichtung mit hoher Ausfallsicherheit;

Fig. 6    ein weiteres Ausführungsbeispiel für eine erfindungsgemäße Netzeinspeisevorrichtung zum Anschluss zweier DC-Energiequellen;

Fig. 7    ein weiteres Ausführungsbeispiel einer erfindungsgemäßen Netzeinspeisevorrichtung mit Filter- und Glättungseinheit;

Fig 8    schematisch ein Ausführungsbeispiel einer dreischenkligen Induktivität einer Filter- und Glättungseinheit für das Ausführungsbeispiel nach Fig. 7;

Fig. 9    ein weiteres Ausführungsbeispiel einer erfindungsgemäßen Netzeinspeisevorrichtung mit Filter- und Glättungseinheit als baueinheitlich zusammengefasste Doppelwechselrichtereinrichtung;

Fig. 10    ein weiteres Ausführungsbeispiel einer erfindungsgemäßen Netzeinspeisevorrichtung mit parallel geschalteten Doppelwechselrichtereinrichtungen;

Fig.11    ein weiteres Ausführungsbeispiel einer erfindungsgemäßen Netzeinspeisevorrichtung mit parallelgeschalteten Wechselrichtereinheiten und mit Filter- und Glättungseinheit;

Fig.12    Ausführungsformen von Drosseln einer Filter- und Glättungseinheit gemäß einem Ausführungsbeispiel der Erfindung.

In den Figuren sind gleiche oder gleichartige Komponenten mit gleichen Bezugszeichen beziffert.

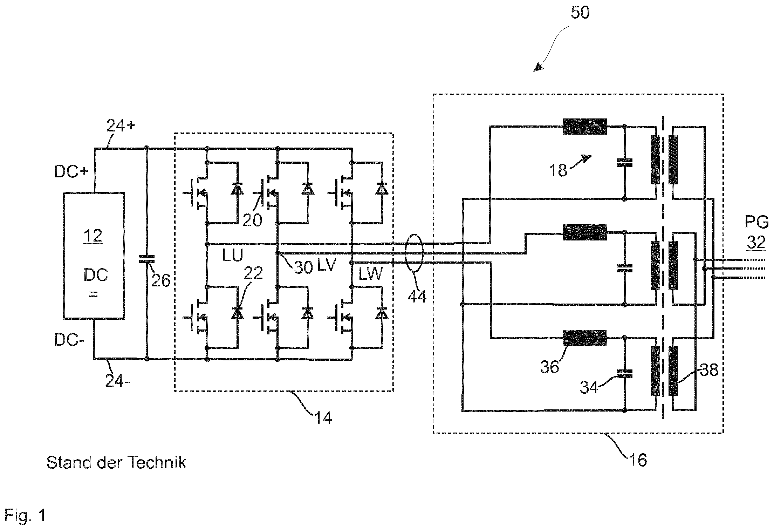

In der Fig. 1 ist ein Schaltdiagramm einer Netzeinspeisevorrichtung 50 des Stands der Technik dargestellt. Eine DC-Energiequelle 12, beispielsweise eine Photovoltaikanordnung speist eine DC-Zwischenkreisspannung, beispielsweise 450 V am Solarzellen-spezifischen MPP in einen DC-Zwischenkreis 24 ein, der ein positives Spannungspotential 24+ und ein negatives Spannungspotential 24- aufweist. Zur Pufferung und Spannungsstabilisierung ist im DC-Zwischenkreis 24 eine Zwischenkreiskapazität 26 eingeschaltet. Zwischen den beiden Zwischenkreispotentialen 24+ und 24- ist eine Wechselrichtereinheit 14 eingeschaltet, die drei Halbbrücken 30 umfasst, wobei jede Halbbrücke 30 im oberen und unteren Teilzweig ein Leistungsschaltelement 20, insbesondere einen Leistungstransistor, IGBT oder ähnliches mit parallel geschalteter Freilaufdiode 22 umfasst, wobei die Freilaufdiode 22 beim Schalten das Leistungsschaltelement 20 vor Spannungsspitzen bzw. Zerstörung schützt. Durch eine nicht dargestellte übergeordnete Steuereinrichtung werden Schaltsignale auf die Schalteingänge der sechs Leistungsschaltelemente 20 gegeben, um phasenrichtig aus den beiden Gleichspannungspotentialen 24+, 24- eine verkettete Drehspannung (AC-Spannung) zu erzeugen, die über eine Transformatorzuleitung 44, die die drei Ausgänge der Halbbrücken 30 mit dem in diesem Fall sternverschalteten Transformatoren 38 verbindet, der Transformatoreinrichtung 16 zugeführt wird. Der Transformator 38 kann auch in Dreiecksschaltung verschaltet sein. Die Transformatoreinrichtung 16 passt das Spannungsniveau der erzeugten AC-Spannung an das Niveau des Versorgungsnetzes 32 an und speist die Energie in das Versorgungsnetz 32 ein. Hierzu sind die Sekundärwicklungen des Transformators 38 in Dreieck verschaltet. Die Netztransformatoreinrichtung 16 umfasst drei Netztransformatorwicklungen 38, die eine galvanische Trennung zwischen Netzeinspeisevorrichtung 10 und Versorgungsnetz 32 herstellen, das Spannungsniveau anpassen und Oberwellen glätten. Zur verbesserten Qualität des abgegebenen PWM modulierten Spannungssignals der Wechselrichtereinheit 14 ist jeder Netztransformatorwicklung 38 eine Glättungseinheit 18 vorgeschaltet, die eine Filterinduktivität 36 und einen Filterkondensator 34 umfasst. Die magnetische und kapazitive Energie, die in der Induktivität 36 bzw. der Kapazität 34 gespeichert werden kann, dient zur Glättung der abgegebenen PWM-Signale der Wechselrichtereinheit 14, um eine möglichst harmonische und gering oberwellenbehaftete AC-Spannung bereitzustellen, die über die Netztransformatorwicklungen 38 in das Drehstromversorgungsnetz 32 übertragen werden kann.

Die maximale wechselstromseitige Ausgangsleistung einer solchen Netzeinspeisevorrichtung 50 wird durch den maximalen Strom und der AC-Ausgangsspannung der Wechselrichtereinheit begrenzt. Die kleinste auftretende MPP-Spannung im DC-Zwischenkreis 24 begrenzt die mögliche AC-Ausgangsspannung. Aus Aspekten des Wirkungsgrades und der Baugröße und der somit erforderlichen Kosten für die beteiligten Leistungsschaltkomponenten 20, 22, 34, 36 und 38 ist eine möglichst hohe AC-Drehspannung erstrebenswert, da sich durch eine höheren Spannung die Verluste bei gleicher Leistung quadratisch verringern, da die Verluste vor allem durch den Strom verursacht werden. Mit der aus dem Stand der Technik bekannten Netzeinspeisevorrichtung 50, die eine Wechselrichtereinheit 14 umfasst, bei der jede Halbbrücke 30 eine Netztransformatorwicklung 38 mit gemeinsamen Sternpunkt oder in Dreieckschaltung zugeordnet ist, kann lediglich eine verkettete effektive Drehstromspannung $U_{AC} < U_{MPPmin}/\sqrt{2} \cdot 0.9$ bereitgestellt werden, wobei sich die 0.9 als 10 % Reserve für die Regelung der Toleranzen ergibt und zumindest eine dritte harmonische Nullkomponente in die Modulation injiziert wird. Wird eine solche Netzeinspeisevorrichtung 50 bei üblichen Photovoltaiksystemen, die beispielsweise eine minimale MPP Spannung von 450 V aufweisen, eingesetzt, so kann lediglich eine Ausgangsspannung von ca. 290 V auf der Drehstromseite abgegeben werden, wodurch eine Aufwärtstransformation mit entsprechenden Transformationsverlusten erforderlich ist, um z.B.in ein 400 V Drehstromversorgungsnetz einzuspeisen. Bei einem beispielhaften 100 kW System müssen alle drehstromseitigen Komponenten, d.h. Wechselrichtereinheit 14, Netztransformatoreinrichtung 16, Glättungseinheit 18 auf bis zu 200 A Strombelastung ausgelegt werden, um die erforderliche elektrische Leistung bereitstellen zu können. Dies macht die entsprechenden Komponenten relativ teuer, und zieht große Umwandlungsverluste nach sich.

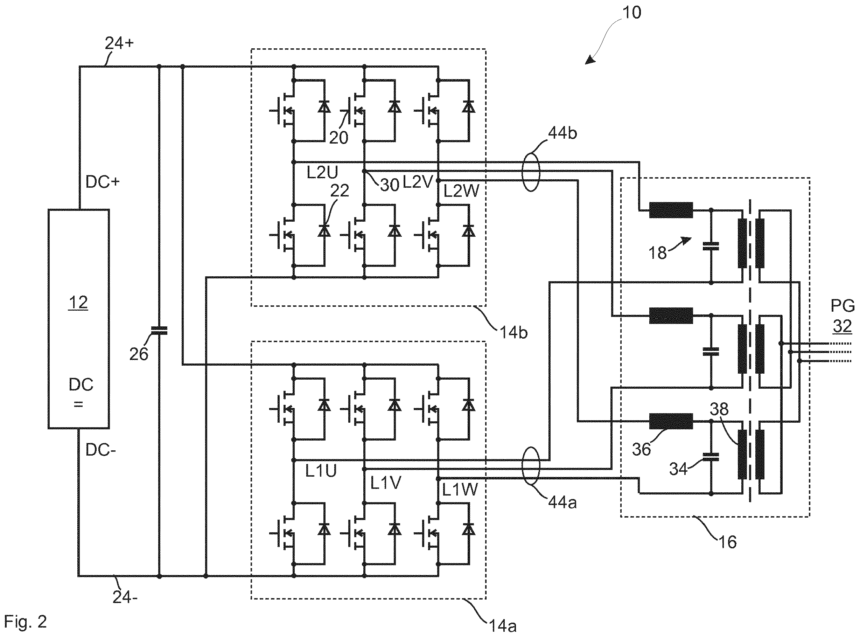

Fig. 2 zeigt ein erstes Ausführungsbeispiel der Erfindung, bei der die Ausgangsseitig die Transformatoreinrichtung 16 drei Netztransformatorwicklungen 38 umfasst, deren Primärwicklungsanschlüsse separat herausgeführt sind. Die Netzeinspeisevorrichtung 10 umfasst zwei Wechselrichtereinheiten 14a, 14b, die ähnlich aufgebaut sind und parallel an einem gemeinsamen DC-Zwischenkreis 24, der DC-Energiequelle angeschlossen sind. Der DC-Zwischenkreis 24+/- wird durch eine Zwischenkreiskapazität 26 stabilisiert. Zwischen einer Halbbrücke 30 jedes der beiden Wechselrichtereinheiten 14a und 14b ist über Transformatorzuleitungen 44, 44b jeweils eine primärseitige Netztransformatorwicklung 38 angeschlossen. Sekundärseitig ist der Transformator 38 in Dreieck geschaltet. Jeder Netztransformatorwicklung 38 ist eine Glättungseinheit 18 zur Glättung der von den Halbbrücken 30 bereitgestellten AC-Spannung vorgeschaltet. Zum Betrieb jeder Netztransformatorwicklung 38 werden jeweils die Halbbrücken 30 der ersten Wechselrichtereinheit 14a und der zweiten Wechselrichtereinheit 14b abgestimmt zueinander gesteuert, wobei mit derselben Taktfrequenz die beiden Halbbrücken geschaltet werden können. Jedoch ist auch ein asynchroner Betrieb denkbar, bei dem beispielsweise die erste Wechselrichtereinheit 14a die Polarität der abzugebenden AC-Spannung vorgibt und netzsynchron zum Versorgungsnetz 32 geschaltet wird und bei dem die Halbbrücken 30 der zweiten Wechselrichtereinheit 14b höherfrequent, beispielsweise mit 4 kHz betrieben werden, um eine PWM-Modulation der abzugebenden AC-Spannung bereitstellen, um die Qualität der abzugebenden AC-Spannung zu verbessern. Mit der dargestellten Lösung ist z.B. beim Einsatz in einer Photovoltaikanwendung möglich, den MPP Spannungsbereich optimal auszuschöpfen, wobei die bereitgestellte AC-Ausgangsspannung um den Faktor $\sqrt{3}$ gegenüber der in Fig. 1 dargestellten Schaltung erhöht werden kann. Dies wird dadurch erreicht, dass der Sternpunkt der Netztransformatoreinrichtung 16 aufgetrennt ist, und somit jeder Netztransformatorwicklung 38 mit den unabhängigen potentialgetrennten Wicklungen separat anschließbar ist, so dass die Transformatoreinrichtung 16 mit sechs Anschlüssen angeschlossen werden kann. Der aufgetrennte Sternpunkt wird mit der jeweiligen zweiten Wechselrichtereinheit 14b verbunden. Die jeweils anderen Enden der Netztransformatorwicklungen 38 werden mit der zweiten Wechselrichtereinheit 14b verbunden. Somit können die beiden Wechselrichtereinheiten derart synchron abgestimmt miteinander getaktet werden, dass die maximale DC-Zwischenkreisspannung zur Abgabe eines erhöhten Spannungsbereichs der AC-Spannung verschaltet werden kann. Hierdurch wird ein verbesserter Wirkungsgrad bei verringerter Strombelastung erreicht, wodurch letztlich günstigere und langlebigere Komponenten eingesetzt werden können.

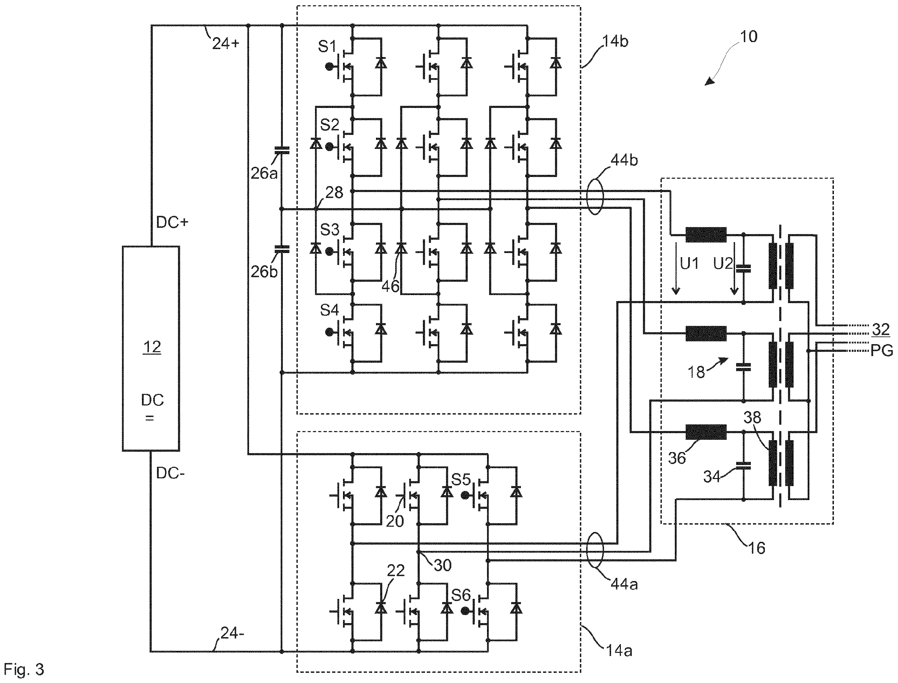

Fig. 3 zeigt ein weiteres Ausführungsbeispiel einer Netzeinspeisevorrichtung 10 für ein Energieeinspeisesystem zur Einspeisung einer Gleichspannungsenergie, beispielsweise einer Photovoltaikspannungsquelle 12. Die beiden Gleichspannungspotentiale 24+, 24- sind parallel an zwei Wechselrichtereinheiten 14a, 14b angeschlossen. Die erste Wechselrichtereinheit 14a ist ein konventioneller 2-Stufen Wechselrichter, der drei Halbbrücken 30 umfasst. Die zweite Wechselrichtereinheit 14b ist als 3-Stufen Wechselrichtereinheit ausgelegt, und umfasst einen künstlichen Mittelpunkt 28, um ein Ausgangspotential jeder Halbbrücke 30 in Höhe des positiven Spannungspotentials 24+, des negativen Spannungspotentials 24-, oder des Potentials des Mittelpunktes 28 auszugeben. Die Wechselrichtereinheit 14a kann in jeder Halbbrücke 30 ein Ausgangspotential in Höhe des positiven Spannungspotentials 24+ oder des negativen Spannungspotentials 24- ausgeben. Die resultierende Ausgangsspannung U1 zwischen den Ausgängen der beiden Wechselrichteinheiten 14a und 14b kann somit je nach Schalterstellung die Werte DC+, DC+/2, 0, DC- /2 oder DC- annehmen. DC bezeichnet dabei die Gleichspannung im Zwischenkreis 24. Somit können insgesamt fünf verschieden hohe Spannungspotentiale abgegeben werden. Der Mittelpunkt 28 der zweiten Wechselrichtereinheit 14b ist durch zwei Zwischenkreiskapazitäten 26a, 26b jeweils mit den beiden DC-Zwischenkreisspannungspotentialen 24+, 24- verbunden. Die Zwischenkreiskapazitäten 26a, 26b dienen zur Stabilisierung der Zwischenkreisspannung. Die Halbbrücken 30 der beiden Wechselrichtereinheiten 14a, 14b sind über Transformatorzuleitungen 44a, 44b an die jeweiligen Anschlussklemmen der Netztransformatorwicklungen 38 der Transformatoreinrichtung 16 angeschlossen. Die als 3-Level-Wechselrichter ausgeführte Wechselrichtereinheit 14b ist hinsichtlich des Wirkungsgrads besonders vorteilhaft, da Schaltverluste reduziert werden und ein optimierter sinusförmiger Verlauf der abzugebenden AC-Spannung erreicht werden kann. Sekundärseitig sind in diesem Ausführungsbeispiel die Transformatorwicklungen in Stern geschaltet, wobei der sich ergebende Sternpunkt ins Versorgungsnetz 32 herausgeführt ist.

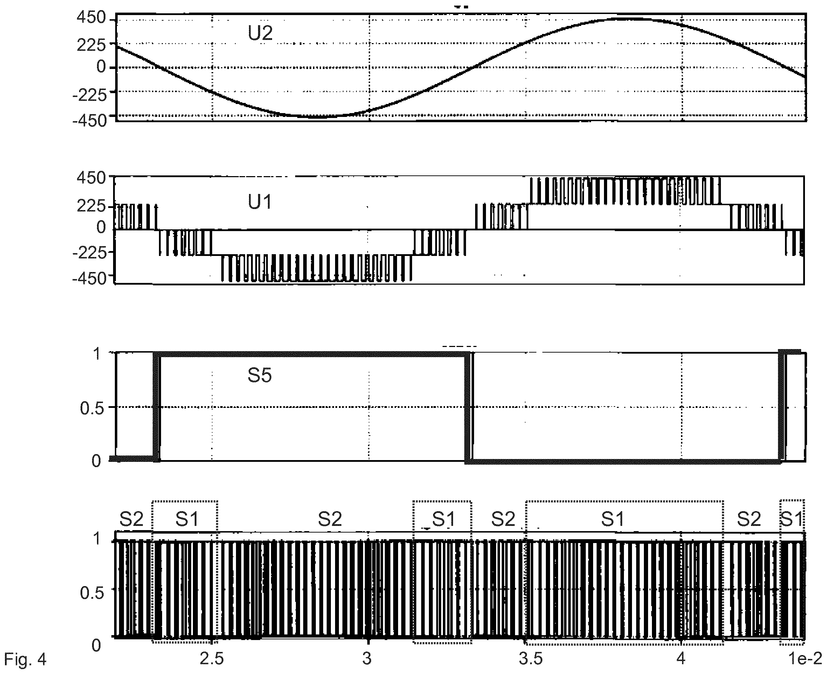

Fig. 4 nimmt Bezug auf das Ausführungsbeispiel der Fig. 3 und zeigt den Ausgangsspannungsverlauf U2 am Eingang der Netztransformatorwicklung 38 bzw. das Eingangsspannungssignal U1 vor der Glättungseinheit 18 der Fig. 4, die in der Transformatoreinrichtung 16 abzugreifen sind. Des Weiteren sind die Schaltsignale an dem Leistungsschaltelement S5 der ersten Wechselrichtereinheit 14a bzw. die Schaltsignale S1, S2 an den Leistungsschaltelementen 20 der zweiten Wechselrichtereinheit 14b dargestellt. Das Schaltsignal S5 der ersten Wechselrichtereinheit 14a gibt die Polarität der abzugebenden AC-Spannungshalbwelle (positiv bzw. negativ) vor. Eine PWM-Modulation der Leistungsschaltelemente S1, S2, die mit etwa 4 kHz geschaltet werden, zeigt sich im Spannungsverlauf U1, der sich als Differenz der Halbbrückenspannungen der beiden Wechselrichtereinheiten 14a, 14b darstellt. Die hochfrequente PWM-Modulation der zweiten Wechselrichtereinheit 14b dient der Modulation der an die Netztransformatorwicklungen 38 abzugebenden Sinuswelle U2. Aus der Spannung U1 wird nach der Glättungseinheit 18 somit eine praktisch ideal-sinusförmige Spannung U2 bereitgestellt, d.h. eine AC-Ausgangsspannung hoher Qualität und geringer Oberwellenbehaftung. Die in Fig. 4 dargestellten Signalverläufe der Spannung U2 an der Transformatorwicklung 38, der Ausgangsspannung U1 vor der Glättungseinheit 18 und den Schaltzuständen des IGBT S5 der ersten Wechselrichtereinheit 14b sowie der IGBT S1 und S2 der zweiten Wechselrichtereinheit 14b stellen die Schaltzustände während einer Phase der AC-Ausgangsspannung dar. S3 wird unter Beachtung von Totzeiten komplementär zu S1 geschaltet und S4 unter Beachtung von Totzeiten komplementär zu S2. S6 wird unter Beachtung von Totzeiten komplementär zu S5 geschaltet. Dabei werden mit einer Schaltfrequenz der zweiten Wechselrichtereinheit 14b von 4 kHz und einer Zwischenkreisspannung von 450 V eine effektive Ausgangsspannung pro Phase und an jeder Transformatorwicklung 38 von ca. 290 V bereitgestellt. Diese Spannung kann bei der dargestellten Erfindung in jeder Phase gestellt werden. Bei dem Stand der Technik können diese 290 V Ausgangsspannung nur als verkettete Größe zwischen zwei Phasen gestellt werden, was einer Spannung von 165 V an jeder Transformatorwicklung 38 eines in Stern geschalteten Transformators (siehe Fig. 1) ergeben würde. Aus diesem Zusammenhang ergibt sich der Gewinn einer um den Faktor $\sqrt{3}$ größeren maximalen AC-Ausgangsspannung.

Folglich ist die erste Wechselrichtereinheit 14a durch die Transformatorzuleitung 44a mit dem Wicklungsende der Netztransformatorwicklungen 38 während der positiven Halbwelle der Ausgangsspannung mit dem negativen Zwischenkreispotential 24- und während der negativen Halbwelle mit dem positiven Zwischenkreispotential 24+ verbunden. Die Wechselrichtereinheit 14a wird netzsynchron mit einer Taktung von 50 Hz getaktet und es fallen zu vernachlässigende Schaltverluste an. Die zweite Wechselrichtereinheit 14b übernimmt die Modulation der Sinusspannung U1 mit einer höheren Taktfrequenz von üblicherweise 4 kHz. Da die drei Wicklungsenden der Transformatoreinrichtung 16 nicht über einen Sternpunkt mit den anderen Wicklungen verbunden sind, sondern je nach Halbwelle mit 24- oder 24+ verbunden sind, stellt die Wechselrichtereinheit 14b in jeder Halbwelle für die Modulation der Spannung für jede einzelne Phase den vollen Spannungshub des DC-Zwischenkreises 24 zur Verfügung. Die maximal erreichbare effektive Ausgangsspannung ergibt sich mit

$$\mathrm{U}_{AC} < U_{MPP\min} \cdot \sqrt{3} / \sqrt{2} \cdot 0.9$$ und ist somit um den Faktor $\sqrt{3}$ höher als die Ausgangsspannung der in Fig. 1 dargestellten Netzeinspeisevorrichtung 50 nach dem Stand der Technik. Beispielhaft beträgt die Ausgangsspannung bei einer minimalen MPP-Spannung einer Photovoltaikzelle von 450 V nun ca. 500 $V_{AC}$ verkettet. Der Ausgangsstrom reduziert sich dabei bei einem 100 kW-System auf ca. 115 A, wodurch eine erhebliche Verkleinerung der Umwandlungsverluste und eine geringere Strombelastung erreichbar sind und günstigere Komponenten eingesetzt werden können.

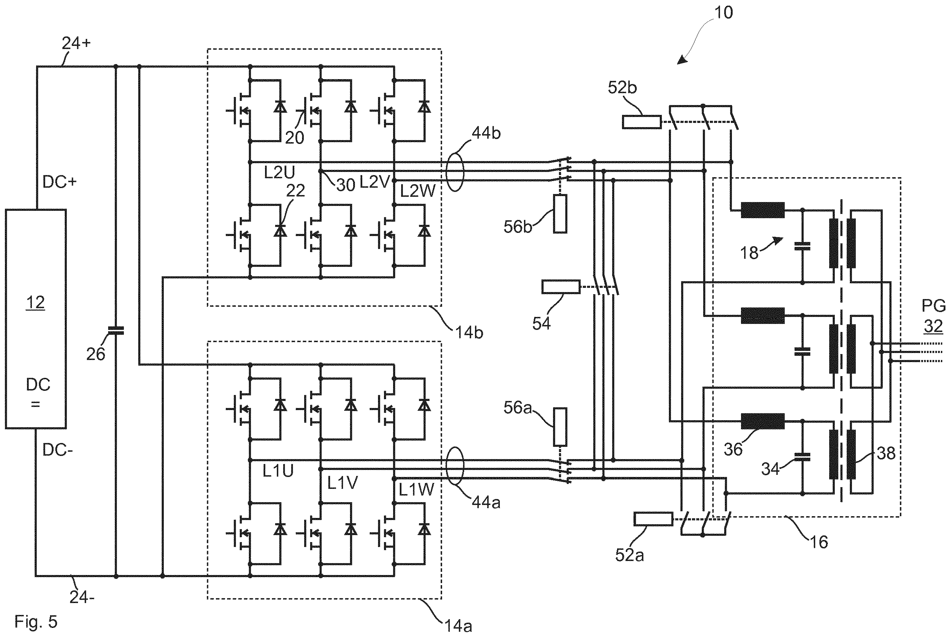

Das Ausführungsbeispiel der Fig. 5 entspricht im Wesentlichen dem der Fig. 2, allerdings kann ein 3- oder mehrstufigen Wechselrichter als erste oder zweite Wechselrichtereinheit 14a, 14b eingesetzt werden. Als Erweiterung kommen eine Entkopplungs-Schalteinrichtung 56a/b hinzu, die eine Freischaltung einer Kontaktseite der Primärwicklungen 38 von der jeweiligen Wechselrichtereinheit 14a/b ermöglicht, sowie bei erfolgter Freischaltung oder Inaktivität der entsprechenden Wechselrichtereinheit 14a/b eine Schaltung der Primärwicklungen in eine kurzgeschlossene Sternschaltung durch eine entsprechende Sternpunkt-Schalteinrichtung 52a/b bzw. Dreiecksschaltung durch eine Dreiecks-Schalteinrichtung 54 ermöglicht. Die Entkopplungs-Schalteinrichtung 52 kann entfallen, sofern die Wechselrichtereinheiten 14 keine Kurzschlüsse erzeugen können, und eine Stern- oder Dreiecksschaltung der Primärwicklungen 38 die Wechselrichtereinheiten 14 unbelastet lassen. Die entsprechenden Schalteinrichtungen können elektromechanisch als Schütze oder als Leistungselektronikbausteine ausgeführt werden. Bei großen Leerlaufspannungen kann beim Anfahren der Netzeinspeisevorrichtung zunächst eine Anfahrt in Stern- und später in Dreiecksschaltung erwogen werden, bevor in einen Doppelwechselrichterbetrieb umgeschaltet werden kann. Bei Ausfall einer Wechselrichtereinheit 14 kann die verbleibende Einheit 14 nach Umschaltung in Stern- oder Dreiecksschaltung zumindest einen Betrieb mit verringerter Leistung aufrecht halten. Die Schaltung wird deutlich robuster, insbesondere bei Anwendungen, die eine hohe Robustheit bedürfen.

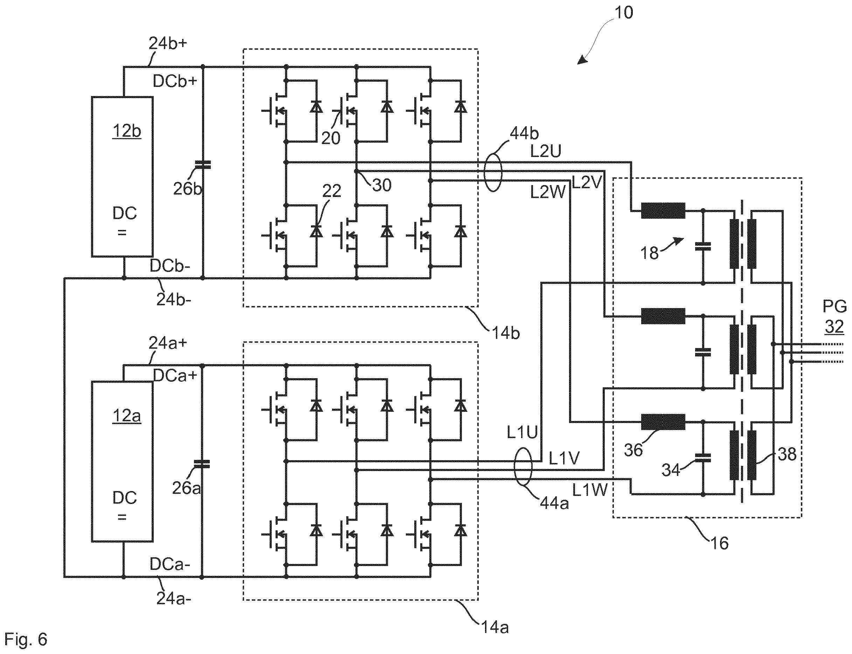

In der Fig. 6 wird des Weiteren ein Betrieb zweier DC-Energiequellen 12a/b, die bevorzugt vom selben Typ sind, aber auch zwei verschiedene Typen von Energiequellen, beispielsweise Photovoltaikzelle und Brennstoffzelle sein können, durch eine erfindungsgemäße Energieversorgungseinrichtung 10 vorgeschlagen. Die erste DC-Energiequelle 12a ist unmittelbar an den DC-Zwischenkreis 24a der ersten Wechselrichtereinheit 14a angeschlossen, und die zweite DC-Energiequelle 12b unmittelbar an den DC-Zwischenkreis 24b der zweiten Wechselrichtereinheit 14b. Vorteilhafterweise wird dieses Ausführungsbeispiel in Kombination mit Schalteinrichtungen nach der Fig. 5 eingesetzt, so dass bei Ausfall oder unterschiedlicher Leistungsfähigkeit der beiden Energiequellen 14a/b in einen Einwechselrichterbetrieb umgeschaltet werden kann, bzw. eine Wechselrichtereinheit 14 abgeschaltet werden kann. Zumindest eine Kontaktseite DC- der beiden Energiequellen24a/b-sind miteinander verbunden, um einen Stromfluss zwischen beiden Energiequellen 12a/b zu gewährleisten. Beide Zwischenkreise 24 sind durch Zwischenkreiskapazitäten 26a/b gestützt. Die DC-Energiequellen 12 und die Wechselrichtereinheiten 14 können mit kleiner Leistung kostengünstig ausgelegt werden und dennoch eine erhöhte Leistung an das Energieversorgungsnetz 32 abgeben.

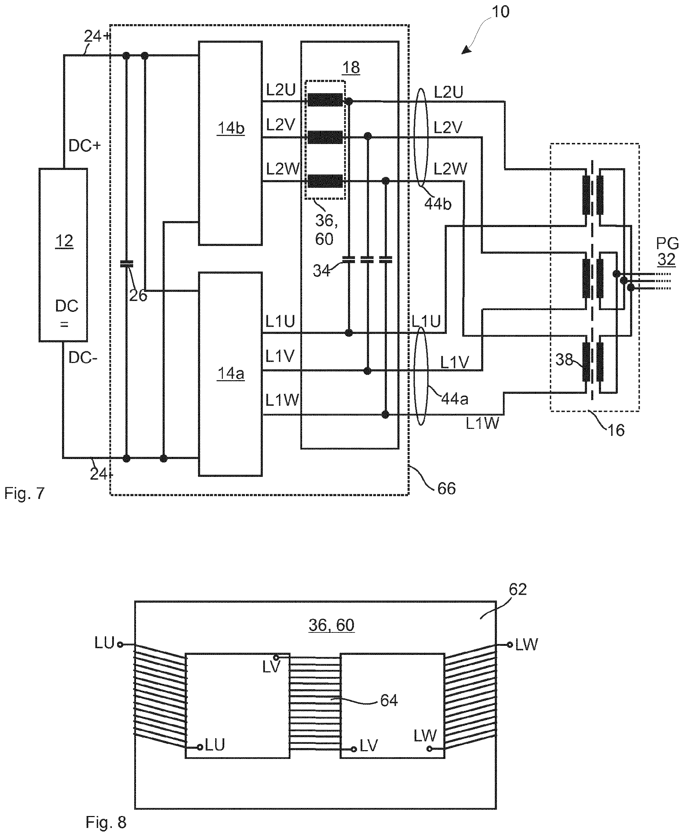

In der Fig. 7 ist ein weiteres Ausführungsbeispiel einer erfindungsgemäßen Netzeinspeisevorrichtung mit Filter- und Glättungseinheit dargestellt, die auf den Ausführungsfomen der Figs. 2 oder 3 beruht. Jede der Wechselrichtereinheiten 14a, 14b kann zwei- oder dreistufig ausgebildet sein. Es ist denkbar, dass eine der beiden Wechselrichtereinheit 14a netzfrequenzsynchron und die zweite Wechselricherheinheit 14b höherfrequent betrieben wird. Dabei bietet es sich an, die erste Wechselrichtereinheit 14a zweistufig und die zweite Wechselrichtereinheit 14b, die die abzugebende Spannung einen sinusförmigen Verlauf annähern soll und Oberwellen glätten soll, drei- oder höherstufig auszubilden, oder mit geringeren Schaltverlusten auszustatten.

Die Filter- und Glättungseinheit 18 ist in einer Baueinheit zusammengefasst, die in die dreiphasigen Ausgänge LU, LV, LW der Wechselrichtereinheiten 14a, 14b eingeschaltet ist. In den Ausgangsphasen L2U, L2V und L2W der zweiten Wechselrichtereinheit 14b sind Filterinduktivitäten 36 eingeschaltet, die, wie in Fig. 8 dargestellt, gemeinsam auf einem dreischenkligen Spulenkörper 62 einer Drossel 60 gewickelt sind. Hierdurch wird eine kompakte Bauform der Filterinduktivität 36 und eine hohe Streuinduktivität erreicht. Zwischen den korrespondierenden Ausgangsphase L1U-L2U, L1V-L2V und L1W-L2W sind Filterkondensatoren 34 geschalt, die in Kombination mit der dreischenkligen Filterdrossel 60 eine LC-Filterung von Oberwellen sowie eine Unterdrückung von Kreisströmen bewirkt. Die dreischenklige Drossel 60 weist einen im wesentlichen dreischenkligen Spulenträger 62 mit drei Spulenträgerschenkel 64 auf, kann allerdings auch nur einen gemeinsamen Schenkel aufweisen, auf dem alle Drosselspulen gewickelt sein können. Durch jede Drosselspule wird eine Ausgangsphase einer Halbbrücke der Wechselrichtereinheit 14b geführt, wobei der Spulenträger 62 eine hohe Streuinduktivität bereitstellt, um gegenüber auftretenden Oberwellen einen hohen induktiven Widerstand zu bilden, und gegenüber einem netzfrequenten Strom geringe Verlustleistungen zu bieten.

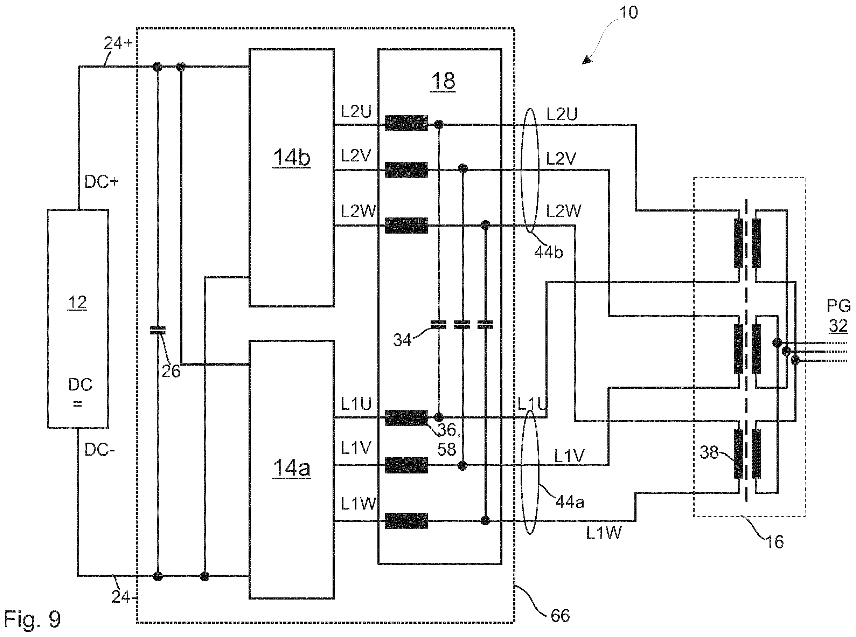

Die Fig. 9 stellt eine Netzeinspeisevorrichtung 10 dar, die ebenfalls auf den Ausführungsfomen der Figs. 2 oder 3 beruht und die Ausführungsform nach Fig. 7 weiterentwickelt. Die Wechselrichtereinheiten 14a, 14b können zweistufig oder dreistufig ausgebildet sein. Die Filter- und Glättungseinheit 18 ist in einer Baueinheit zusammengefasst, die in die dreiphasigen Ausgänge LU, LV, LW der Wechselrichtereinheiten 14a, 14b eingeschaltet ist. Nach Durchführung der Ausgangsphasen der Wechselrichtereinheiten durch die Filter- und Glättungseinheit 18 sind korrespondierende Phasen der Wechselrichterausgänge L1U & L2U, L1V & L2V sowie L1W & L2W mit den primärseitigen Spulen 38 der Transformatoreinrichtung 16 verbunden. Die Filter- und Glättungseinheit 18 umfasst für jeden Phasenausgang L1U, L1V, L2W,L2U, L2V und L2W eine stromkompensierte Drossel 58 als Filterinduktivität 36 sowie Filterkondensatoren 34, die zwischen den einer Primärspule 38 der Transformatoreinrichtung 16 korrespondierenden Phasen der Wechselrichtereinheiten 14a, 14b zwischengeschaltet sind. Jeweils zwei Filterinduktivitäten 36 als stromkompensierte Drosseln 58 und ein Filterkondensator 34 bilden ein LC-Glied, das zum einen Oberwellen als Tiefpassfilter unterdrückt, zum anderen durch die stromkompensierende Wirkung der Drosseln 58 Kreisströme zwischen Halbbrücken verschiedener Primärspulen 38 dämpft.

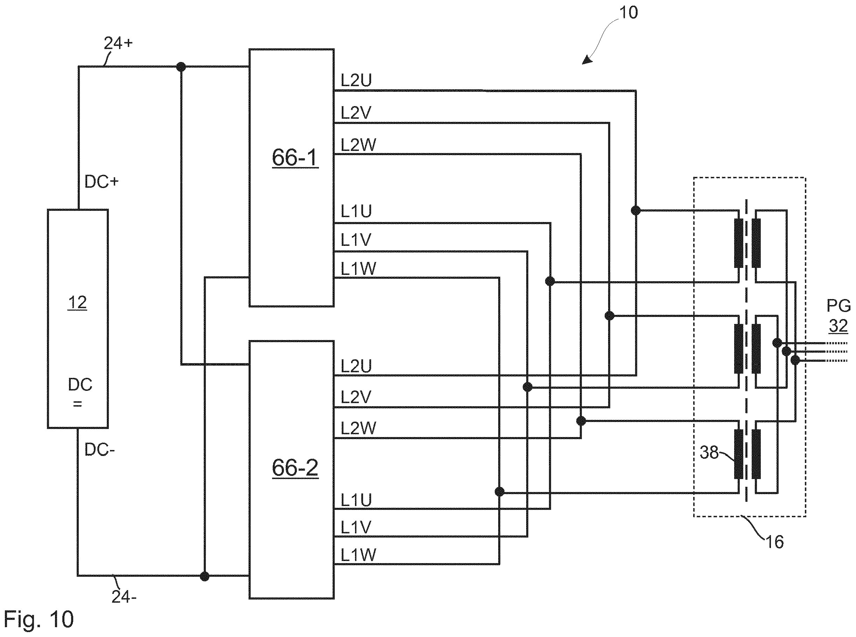

In der Fig. 10 ist ein weiteres Ausführungsbeispiel einer erfindungsgemäßen Netzeinspeisevorrichtung mit parallel geschalteten Doppelwechselrichtereinrichtungen 66 dargestellt. Jede Doppelwechselrichtereinrichtung 66 nimmt zwei Wechselrichtereinheiten 14a und 14b sowie eine Filter- und Glättungseinheit nach dem Ausführungsbeispiel nach Fig. 9 auf. Die Ausgangsphasen L1U, L1V und L1W der ersten Wechselrichtereinheit 14a der ersten Doppelwechselrichtereinrichtung 66-1 sind mit den Ausgangsphasen L1U, L1V und L1W der ersten Wechselrichtereinheit 14a der zweiten Doppelwechselrichtereinrichtung 66-2 verbunden, ebenso sind die Ausgangsphasen L2U, L2V und L2W der zweiten Wechselrichtereinheit 14b der ersten Doppelwechselrichtereinrichtung 66-1 mit den Ausgangsphasen L2U, L2V und L2W der zweiten Wechselrichtereinheit 14b der zweiten Doppelwechselrichtereinrichtung 66-2 verbunden. Somit kann eine doppelte Einspeiseleistung zur Verfügung gestellt werden, wobei fakultativ durch nicht dargestellte Schaltelemente zwischen den beiden Doppelwechselrichtereinrichtungen 66-1, 66-2 umgeschaltet bzw. eine der beiden zugeschaltet werden kann, um eine Redundanz und Skalierbarkeit bereitzustellen, sowie einen Notbetrieb zu ermöglichen, sofern eine Doppelwechselrichtereinrichtung 66 ausfällt. Eine Doppelwechselrichtereinrichtung 66 kann in einer Baueinheit integriert und monolithisch in einer Netzeinspeisevorrichtung integriert sein, und weist zwei DC-Spannungseingänge sowie zwei dreiphasige Ausgänge zum Anschluss an die Primärwicklungen 38 der Transformatoreinrichtung 16 auf. Eine Parallelschaltung der Doppelwechselrichtereinrichtungen 66-1, 66-2 wird durch die Filter- und Glättungseinheit 18, und insbesondere durch die in die jeweiligen Ausgangsphasen eingeschalteten Filterinduktivitäten 36 ermöglicht. Es versteht sich von selbst, dass weitere Doppelwechselrichtereinrichtungen 66 problemlos parallel geschaltet werden können, um eine Abgabeleistung weiter zu erhöhen, z.B. wenn die Leistungsabgabe der DC-Spannungsquelle durch Erweiterungsmaßnahmen erhöht wird.

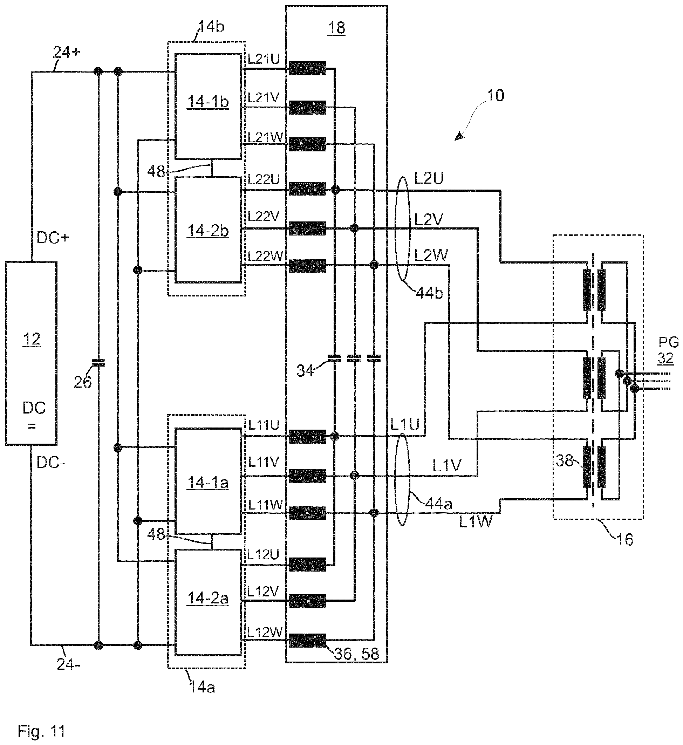

Die Ausführungsform einer Netzeinspeisevorrichtung nach Fig. 11 baut auf dem Konzept der Schaltung der Fig. 9 und Fig. 10 auf, und stellt das Konzept der Fig. 10 in einer alternativen, detaillierten und nicht baueinheitsorientierten Schaltungsdarstellung dar, wobei in diesem Fall zwei Wechselrichtereinheiten 14-1a und 14-2a zu einer Wechselrichtereinheit 14a sowie zwei Wechselrichtereinheiten 14-2a und 14-2b zu einer Wechselrichtereinheit 14b parallel geschaltet sind und synchron zueinander betrieben werden. Dementsprechend weist die Filter- und Glättungseinheit 18 Filterinduktivitäten 36 für jede Ausgangsphase L11U, L11V L11W der Wechselrichtereinheit 14-1a sowie Filterinduktivitäten für jede Ausgangsphasen L12U, L12V und L12W der zweiten Wechselrichtereinheit 14-2a der Wechselrichtereinheit 14a auf. Entsprechendes gilt für die Wechselrichtereinheiten 14-1b und 14-2b der zweiten Wechselrichtereinheit 14b. Ansonsten ist die Filter- und Glättungseinheit 18 wie in der Schaltung nach Fig. 7 aufgebaut. Die beiden Wechselrichtereinheiten 14-1a, 14-2a bzw. 14-1b, 14-2b sind parallel geschaltet und können jeweils durch eine Synchronisierungsleitung 48 miteinander verbunden werden. Über die Synchronisierungsleitung 48 können die Halbbrücken-Sc haltelemente beider parallel geschalter Wechselrichtereinheiten 14-1a, 14-2a sowie 14-1b, 14-2b simultan angesteuert werden, oder diese dient dazu, die Generierung von PWM-Schaltsignalen der nicht dargestellten PWM-Steuereinrichtungen der Wechselrichtereinheiten 14-1, 14-2 zu synchronisieren. Allerdings ist es auch möglich, die beiden parallel geschalteten Wechselrichtereinheiten 14-1a, 14-2a bzw. 14-1b, 14-2b nicht synchronisiert zu betreiben, wobei bei annähernd synchroner Arbeitsweise dennoch vorteilhafte Wirkungen erreichbar sind und Verkabelungsaufwand eingespart werden kann.

Die Zusammenschaltung der Halbbrückenausgänge zweier parallel betriebener Wechselrichtereinheiten wird durch die Kopplung über die stromkompensierten Drosseln 58 ermöglicht, wodurch Oberwellen gedämpft und unerwünschte Kreisströme und Gleichtaktstromkomponenten unterdrückt werden können. Durch einen Parallelbetrieb zweier oder mehrerer Wechselrichtereinheiten kann die Einspeiseleistung durch den Einsatz kostengünstiger und leistungsbegrenzter Wechselrichter erhöht werden, eine Redundanz geschaffen und die Fehleranfälligkeit gesenkt werden. Auch kann bedarfsweise ein parallel geschalteter Wechselrichter zu- oder abgeschaltet werden, so dass Schaltverluste minimiert werden können, um entsprechend einer einzuspeisenden Energiemenge eine bedarfsgerechte Wechselrichterschaltkapazität bereitzustellen. Durch den Parallelbetrieb leistungsarmer, kostengünstiger Wechselrichter ist eine Kaskadierung gegeben, und bestehende Anlagen können in Ihrer Einspeiseleistung skaliert bzw. nachträglich erweitert werden, wobei Teile einer bereits vorhandenen Netzeinspeiseschaltung weiterhin verwendet werden können.

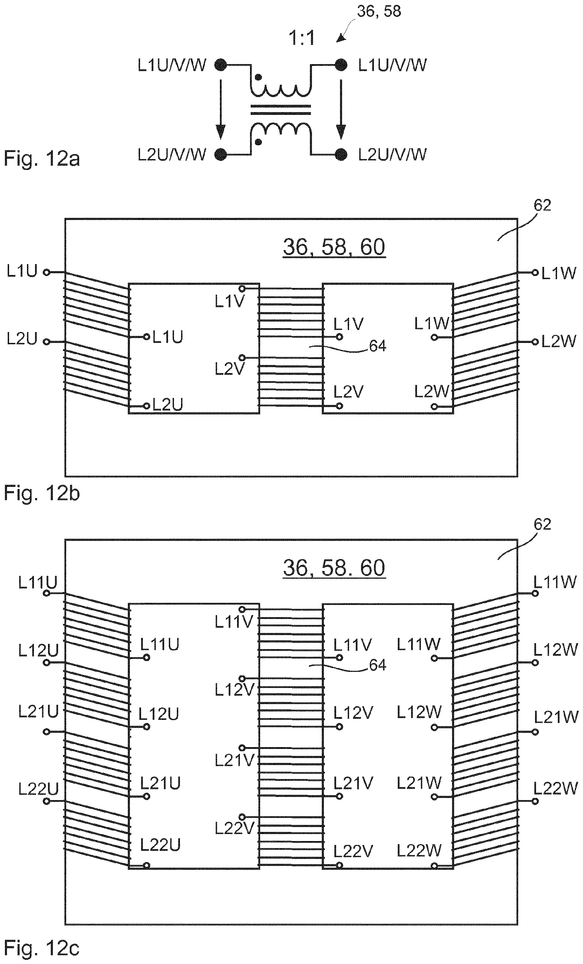

Fig. 12 zeigt in einer ersten Fig. 12a ein Ersatzschaltbild einer stromkompensierten Drossel 58 als Filterinduktivität 36, die einen doppelpoligen Ein- und Ausgang für eine Hin- und eine Rückleitung L1U/V/W, L2U/V/W zwischen den korrespondierenden Halbbrücken der beiden Wechselrichtereinheiten 14a, 14b im Doppelwechselrichterbetrieb und einer zugeordneten Primärspule 36 einer Transformatoreinrichtung 16 umfasst. Die Gleichtaktdrossel 36 weist zwei Spulen auf, die gegensinnig vom Spulenstrom der Primärspule 38 durchflossen werden, so dass sich die magnetischen Felder im Kern der Drossel 58 aufheben und gleichsinnige Störströme aufgrund der hohen Induktivität der Drossel 58 stark gedämpft werden. Für Kreisströme zwischen den beiden Wechselrichtereinheiten weist die Drossel 36 eine sehr hohe Induktivität auf, da sich deren Magnetfelder in dem Drosseljoch nicht kompensieren, sondern verstärken.

Die Figs. 12b und 12c zeigen schematisch mögliche Bauformen dreischenkliger Spulenträger 62 einer stromkompensierten Dreiphasen-Drossel 58, in denen jeweils Ströme für die Hin- und Rückleitung einer Primärspule 38 einer Transformatoreinrichtung 16 geführt werden können. Hierbei werden die Phasenausgänge der korrespondierenden Halbbrücken der Wechselrichtereinheiten 14a, 14b jeweils um einen einzelnen Schenkel 64 des dreischenkligen Spulenträgers 62 gegensinnig geführt, so dass Gleichtakt-Kreisströme unterdrückt werden können. Jeder Schenkel 64 trägt Spulen für die Zuleitung zu einer Primärwicklung 38 der Netztransformatoreinrichtung 16. Der Spulenträger 62 umfasst eine Reihe geblechter Metallschichten, um Wirbelströme zu unterdrücken, und um eine hohe magnetische Streuinduktivität bereitstellen zu können. In der Fig. 9c ist eine Filterinduktivität 36 als dreischenklige Drossel 60 dargestellt, die in einer Filter- und Glättungseinheit 18 einer Netzeinspeisevorrichtung 10 nach Fig. 8 umfasst sein kann. Die dreischenklige Drossel 60 trägt auf jedem Schenkel 64 vier Spulen, wobei jeweils zwei Spule den Halbbrücken der parallel geschalteten Wechselrichtereinheiten 14-1a, 14-2a der ersten Wechselrichtereinheit 14a und zwei gegensinnig gewickelte Spulen den Halbbrücken der parallel geschalteten Wechselrichtereinheiten 14-1b, 14-2b der zweiten Wechselrichtereinheit 14b zugeordnet sind. Hierdurch kann eine kompakte Bauform einer stromkompensierten Entkopplungsdrossel 36 einer Filter- und Glättungseinheit 18 vorgeschlagen werden, durch die zwei oder mehrere Wechselrichtereinheiten parallel betrieben zu einer Wechselrichtereinheit zusammengeschaltet werden können, so dass die Einspeiseleistung durch Parallelbetrieb kostengünstig erhöht werden kann.

Die in der Fig. 5 und Fig. 6 dargestellten Schaltungsvarianten einer erhöhten Ausfallsicherheit durch Hinzufügung von Schalteinrichtungen 52, 54, 56 und Betrieb zweier DC-Energiequellen12a/b innerhalb einer Netzeinspeisevorrichtung 10 können beliebig mit einer in den Figs. 2, 3, 6, 7, 9, 10 oder 11 dargestellten Ausführungsbeispielen oder einer beliebigen Mischung dergleichen integriert werden.

Durch die dargestellten Netzeinspeisevorrichtungen mit Doppelwechselrichtertopologie ergibt sich eine deutliche Erhöhung des Wirkungsgrades, da die ohmschen Verluste in der Transformatoreinrichtung 16 und in den Glättungsinduktivitäten 36 quadratisch zum Strom I sind. Die Wechselrichterverluste der zweiten Wechselrichtereinheit 14b können deutlich reduziert werden. Allerdings kommen weitere Wechselrichterverluste durch den Einsatz zweier Wechselrichtereinheiten 14a, 14b hinzu, die aber bei einer niederfrequenten 50 Hz Taktung der ersten Wechselrichtereinheit 14a entsprechend der Netzfrequenz nur als Durchlassverluste entsprechend gering sind. Die Verlustreduzierung in den restlichen Komponenten und im Gesamtsystem überkompensieren diese Zusatzverluste deutlich. Es ergibt sich ein Gesamtwirkungsgradgewinn von typisch 0.3 bis 1 %. Die zweite Wechselrichtereinheit 14b kann üblicherweise als Standard 2-Stufen Wechselrichtereinheit ausgeführt werden. In der Variante als 3-Stufen Wechselrichtereinheit ergibt sich der Vorteil, dass die Schaltverluste deutlich reduziert werden können und somit das Gesamtsystem einen noch höheren Wirkungsgrad erreicht. Durch die Möglichkeit einer Parallelschaltung von erreicht.

**Patentansprüche**

1. Netzeinspeisevorrichtung (10) zur Einspeisung elektrischer Energie zumindest einer DC-Energiequelle (12) in ein dreiphasiges AC-Versorgungsnetz (32), wobei die Gleichspannung eines DC Zwischenkreises (24) mittels zweier Wechselrichtereinheiten (14a; 14b) in eine Drehspannung umgewandelt und mittels einer Transformatoreinrichtung (16), umfassend drei Netztransformatorwicklungen (38), in das AC-Versorgungsnetz (24) eingespeist wird, und ein erster Wicklungsanschluss der Netztransformatorwicklungen (38) an eine Halbbrücke (30) einer ersten Wechselrichtereinheit (14a), und ein zweiter Wicklungsanschluss der Netztransformatorwicklungen (38) der Transformatoreinrichtung (16) an eine Halbbrücke einer zweiten Wechselrichtereinheit (14b) angeschlossen ist, **dadurch gekennzeichnet, dass** die Netzeinspeisevorrichtung (10) eingerichtet ist, die erste Wechselrichtereinheit (14a) in einer netzsynchronen Taktung, insbesondere 50 Hz oder 60 Hz zur Vorgabe der Polarität der abzugebenden Versorgungsnetzspannung zu betreiben, und die zweite Wechselrichtereinheit (14b) in einer höherfrequenten und zur Netzfrequenz abgestimmten PWM-Taktung, insbesondere größer 500 Hz, bevorzugt mindestens 4 kHz zur Modulation und Glättung der abzugebenden Versorgungsnetzspannung zu betreiben.

2. Netzeinspeisevorrichtung (10) nach Anspruch 1, **dadurch gekennzeichnet, dass** zwischen den Wechselrichtereinheiten (14a, 14b) und der Transformatoreinrichtung (16), insbesondere vor jeder Primärwicklung (38) der Transformatoreinrichtung (16) eine Filter- und Glättungseinheit (18) vorgeschaltet ist, die bevorzugt zumindest einen Filterkondensator (38) und zumindest eine Filterinduktivität (36) umfasst.

3. Netzeinspeisevorrichtung (10) nach Anspruch 2, **dadurch gekennzeichnet, dass** zu jeder Primärwicklung (38) eine Filterinduktivität (36) der Filter- und Glättungseinheit (18) in Reihe angeordnet ist.

4. Netzeinspeisevorrichtung (10) nach Anspruch 3, **dadurch gekennzeichnet, dass** die Filterinduktivität (36) zwei Drosseln umfasst, die in der Hin- und Rückleitungsphase L1U- L2U, L1V-L2V, L1W-L2W der Primärwicklung (38) eingeschaltet ist.

5. Netzeinspeisevorrichtung (10) nach Anspruch 4, **dadurch gekennzeichnet, dass** die Drosseln (58) der Filterinduktivität (36) der Hin- und Rückleitungsphasen L1U- L2U, L1V-L2V, L1W-L2W stromkompensiert ausgeführt sind.

6. Netzeinspeisevorrichtung (10) nach einem der Ansprüche 3 bis 5, **dadurch gekennzeichnet, dass** die Filterinduktivitäten (36, 58, 60) auf einem mehrschenkligen, insbesondere dreischenkligen Spulenträger (62) aufgewickelt sind.

7. Netzeinspeisevorrichtung (10) nach einem der Ansprüche 2 bis 6, **dadurch gekennzeichnet dass** zwei oder mehrere Wechselrichtereinheiten (14-1a & 14-2a, 14-1b & 14-2b) parallel geschaltet und synchron betrieben zu einer Wechselrichtereinheit (14a, 14b) zusammengefasst sind, wobei die Ausgangsphasen L11U & L12U, L11V & L12V, L11W & L12W, L21U & L22U, L21V & L22V und L21W & L22W über Drosseln (36, 58), bevorzugt über eine mehrschenklige Drossel (60) miteinander gekoppelt sind.

8. Netzeinspeisevorrichtung (10) nach Anspruch 7, **dadurch gekennzeichnet, dass** zumindest die Wechselrichtereinheiten (14-1a & 14-1b, 14-2a & 14-2b) der beiden Wechselrichtereinheiten (14a, 14b) und die zugeordneten ausgangsseitigen Filter- und Glättungseinheiten (18) in einer gemeinsamen Baueinheit der Doppelwechselrichtereinrichtung (66) zusammengefasst sind, und zwei oder mehrere Doppelwechselrichtereinrichtungen (66-1, 66-2) parallel geschaltet sind, wobei die Ausgangsphasen der in den Doppelwechselrichtereinrichtungen (66) umfassten Wechselrichtereinheiten (14-1a & 14-2a, 14-1b & 14-2b) miteinander verbunden sind.

9. Netzeinspeisevorrichtung (10) nach einem der vorangegangenen Ansprüche, **dadurch gekennzeichnet, dass** zumindest die zweite Wechselrichtereinheit (14b) eine 3-stufige oder höherstufige Wechselrichtereinheit mit Sternpunkt (28) ist.

10. Netzeinspeisevorrichtung (10) nach einem der vorangegangenen Ansprüche, **dadurch gekennzeichnet, dass** an den ersten und/oder zweiten Wicklungsanschlüssen der Netztransformatorwicklungen (38) eine Schalteinrichtung (52, 54, 56) zur Entkopplung von der Wechselrichtereinheit (14) und/oder zur Stern- und/oder Dreieckschaltung der Wicklungsanschlüsse vorgesehen ist.

11. Netzeinspeisevorrichtung (10) nach einem der vorangegangenen Ansprüche, **dadurch gekennzeichnet, dass** die erste Wechselrichtereinheit (14a) mit einer ersten DC-Energiequelle (12a) und die zweite Wechselrichtereinheit (14b) mit einer zweiten DC-Energiequelle (12b) verbunden ist.

12. Energieeinspeisesystem umfassend eine DC-Energiequelle (12) und eine Netzeinspeisevorrichtung (10) nach einem der vorgenannten Ansprüche, **da-**

**durch gekennzeichnet, dass** die DC-Energiequelle (12) eine Photovoltaikquelle, eine Brennstoffzellenquelle, eine Akkumulatorquelle oder ein mechanisch antriebbarer Generator mit Gleichrichter ist.

13. Verfahren zum Betrieb einer Netzeinspeisevorrichtung (10) nach Anspruch 1, wobei die erste und die zweite Wechselrichtereinheit (14a, 14b) derart abgestimmt betrieben werden, dass die auf jede Primärspule (38) der Transformatoreinrichtung (16) einwirkende Spannung auf eine Amplitude von 0 V bis zum Zwischenkreispotential DC+/DC- einstellbar ist, **dadurch gekennzeichnet, dass** die erste Wechselrichtereinheit (14a) zur Vorgabe der Polarität der abzugebenden Versorgungsnetzspannung netzfrequenzsynchron, insbesondere in einer 50 Hz oder 60 Hz Taktung betrieben wird, und die zweite Wechselrichtereinheit (14b) mit einer höherfrequenten und zur Netzfrequenz abgestimmten PWM-Taktung, insbesondere größer 500 Hz, bevorzugt 4 kHz zur Modulation und Glättung der abzugebenden Versorgungsnetzspannung betrieben wird.

14. Verfahren nach Anspruch 13, **dadurch gekennzeichnet, dass** zumindest die zweite Wechselrichtereinheit (14b) in zumindest drei Spannungsstufen zur PWM-modulierten Glättung der Versorgungsnetzspannung geschaltet wird.

15. Verfahren nach einem der Ansprüche 13 oder 14, **dadurch gekennzeichnet, dass** parallel geschaltete Wechselrichtereinheiten (14) ausgangsseitig über eine Filter- und Glättungseinheit (18) zur Leistungserhöhung miteinander verbunden sind, und synchron betrieben werden.

**Claims**

1. A grid feed apparatus (10) for feeding electrical energy from at least one DC energy source (12) into a three-phase AC supply grid (32), the direct voltage of a DC link (24) being converted into a three-phase voltage by means of two inverter units (14a; 14b) and fed into the AC supply grid (24) by means of a transformer device (16) comprising three grid transformer windings (38), and a first winding termination of the grid transformer windings (38) being connected to a half-bridge (30) of a first inverter unit (14a), and a second winding termination of the grid transformer windings (38) of the transformer device (16) being connected to a half-bridge of a second inverter unit (14b), **characterised in that** the grid feed apparatus (10) is configured to operate the first inverter unit (14a) with grid-synchronous clocking, in particular 50 Hz or 60 Hz, for specifying the polarity of the supply grid voltage to be output, and to operate the second inverter unit (14b) with higher-frequency PWM clocking coordinated with the grid frequency, in particular greater than 500 Hz, preferably at least 4 kHz, for modulating and smoothing the supply grid voltage to be output.

2. A grid feed apparatus (10) according to Claim 1, **characterised in that** a filtering and smoothing unit (18) is connected in series between the inverter units (14a, 14b) and the transformer device (16), in particular upstream of each primary winding (38) of the transformer device (16), said filtering and smoothing unit (18) preferably comprising at least one filter capacitor (38) and at least one filter inductor (36).

3. A grid feed apparatus (10) according to Claim 2, **characterised in that** one filter inductor (36) of the filtering and smoothing unit (18) is arranged in series relative to each primary winding (38).

4. A grid feed apparatus (10) according to Claim 3, **characterised in that** the filter inductor (36) comprises two chokes, which are inserted in the outgoing and return phase L1U-L2U, L1V-L2V, L1W-L2W of the primary winding (38).

5. A grid feed apparatus (10) according to Claim 4, **characterised in that** the chokes (58) of the filter inductor (36) of the outgoing and return phases L1U-L2U, L1V-L2V, L1W-L2W are of current-compensated construction.

6. A grid feed apparatus (10) according to one of Claims 3 to 5, **characterised in that** the filter inductors (36, 58, 60) are wound on a multi-legged, in particular three-legged coil frame (62).

7. A grid feed apparatus (10) according to one of Claims 2 to 6, **characterised in that** two or more inverter units (14-1a & 14-2a, 14-1b & 14-2b) are connected in parallel and combined in synchronously operated manner into one inverter unit (14a, 14b), wherein the output phases L11U & L12U, L11V & L12V, L11W & L12W, L21U & L22U, L21V& L22V and L21W& L22W are coupled together via chokes (36, 58), preferably via a multi-legged choke (60).

8. A grid feed apparatus (10) according to Claim 7, **characterised in that** at least the inverter units (14-1a & 14-1b, 14-2a & 14- 2b) of the two inverter units (14a, 14b) and the associated output side filtering and smoothing units (18) are combined into a common module of the dual inverter device (66), and two or more dual inverter devices (66-1, 66-2) are connected in parallel, wherein the output phases of the inverter units (14-1a & 14-2a, 14-1b & 14-2b) encompassed in the dual inverter devices (66) are connected together.

**9.** A grid feed apparatus (10) according to one of the preceding claims, **characterised in that** at least the second inverter unit (14b) is an inverter unit having three or more levels and with star point (28).

**10.** A grid feed apparatus (10) according to one of the preceding claims, **characterised in that** at the first and/or second winding terminations of the grid transformer windings (38) a switching device (52, 54, 56) is provided for decoupling from the inverter unit (14) and/or for star- and/or delta-connection of the winding terminations.

**11.** A grid feed apparatus (10) according to one of the preceding claims, **characterised in that** the first inverter unit (14a) is connected with a first DC energy source (12a) and the second inverter unit (14b) with a second DC energy source (12b).

**12.** An energy feed system comprising a DC energy source (12) and a grid feed apparatus (10) according to one of the preceding claims, **characterised in that** the DC energy source (12) is a photovoltaic source, a fuel cell source, a storage battery source or a mechanically drivable generator with rectifier.

**13.** A method for operating a grid feed apparatus (10) according to Claim 1, the first and second inverter units (14a, 14b) being operated in coordinated manner such that the voltage acting on each primary coil (38) of the transformer device (16) is adjustable to an amplitude of from 0 V up to the DC link potential DC+/DC-, **characterised in that** the first inverter unit (14a) is operated in grid frequency-synchronous manner, in particular with 50 Hz or 60 Hz clocking, for specifying the polarity of the supply grid voltage to be output, and the second inverter unit (14b) is operated with higher-frequency PWM clocking coordinated with the grid frequency, in particular greater than 500 Hz, preferably 4 kHz, for modulating and smoothing the supply grid voltage to be output.

**14.** A method according to Claim 13, **characterised in that** at least the second inverter unit (14b) is connected in at least three voltage stages for PWM-modulated smoothing of the supply grid voltage.

**15.** A method according to one of Claims 13 or 14, **characterised in that** parallel-connected inverter units (14) are connected together on the output side via a filtering and smoothing unit (18) to increase power, and are operated synchronously.

**Revendications**

**1.** Dispositif d'injection réseau (10) destiné à injecter de l'électricité d'au moins une source de courant CC (12) dans un réseau d'alimentation en courant CA triphasé (32), sachant que la tension continue d'un circuit intermédiaire CC (24) est transformée en une tension triphasée au moyen de deux unités d'onduleurs (14a ; 14b) et est injectée dans le réseau d'alimentation en courant CA (24) au moyen d'un dispositif à transformateur (16) comprenant trois enroulements de transformateur de puissance (38), et qu'un premier connecteur d'enroulement des enroulements de transformateur de puissance (38) est raccordé à un demi-pont (30) d'une première unité d'onduleur (14a) et qu'un second connecteur d'enroulement des enroulements de transformateur de puissance (38) du dispositif à transformateur (16) est raccordé à un demi-pont d'une seconde unité d'onduleur (14b), **caractérisé en ce que** le dispositif d'injection réseau (10) est configuré pour exploiter la première unité d'onduleur (14a) à une fréquence synchronisée avec le réseau, notamment 50 Hz ou 60 Hz, pour prescrire la polarité de la tension du réseau d'alimentation à délivrer, et pour exploiter la seconde unité d'onduleur (14b) à une fréquence MLI plus élevée et accordée à la fréquence du réseau, notamment supérieure à 500 Hz, de préférence au moins 4 kHz pour moduler et lisser la tension du réseau d'alimentation à délivrer.

**2.** Dispositif d'injection réseau (10) selon la revendication 1, **caractérisé en ce qu'**entre les unités d'onduleurs (14a, 14b) et le dispositif à transformateur (16) est monté en amont, notamment, en amont de chaque enroulement primaire (38) du dispositif à transformateur (16), une unité de filtrage et de lissage (18) qui comprend de préférence au moins un condensateur de filtrage (38) et au moins une inductance de filtrage (36).

**3.** Dispositif d'injection réseau (10) selon la revendication 2, **caractérisé en ce qu'**une inductance de filtrage (36) de l'unité de filtrage et de lissage (18) est montée en série avec chaque enroulement primaire (38).

**4.** Dispositif d'injection réseau (10) selon la revendication 3, **caractérisé en ce que** l'inductance de filtrage (36) comprend deux bobines d'arrêt qui sont interposées dans la phase d'aller et de retour L1U-L2U, L1V-L2V, L1W-L2W de l'enroulement primaire (38).

**5.** Dispositif d'injection réseau (10) selon la revendication 4, **caractérisé en ce que** les bobines d'arrêt (58) de l'inductance de filtrage (36) des phases d'aller et de retour L1U-L2U, L1V-L2V, L1W-L2W sont compensées en courant.

**6.** Dispositif d'injection réseau (10) selon une des revendications 3 à 5, **caractérisé en ce que** les inductances de filtrage (36, 58, 60) sont enroulées sur un moyeu de bobine (62) à plusieurs branches, notamment à trois branches.

7. Dispositif d'injection réseau (10) selon une des revendications 2 à 6, **caractérisé en ce que** deux ou plusieurs unités d'onduleurs (14-1a & 14-2a, 14-1b & 14-2b) branchées en parallèle et exploitées de manière synchrone sont regroupées en une unité d'onduleur (14a, 14b), sachant que les phases de sortie L11U & L12U, L11V & L12V, L11W & L12W, L21U & L22U, L21V & L22V et L21W & L22W sont couplées ensemble au moyen de bobines d'arrêt (36, 58), de préférence au moyen d'une bobine d'arrêt à plusieurs branches (60).

8. Dispositif d'injection réseau (10) selon la revendication 7, **caractérisé en ce qu'**au moins les unités d'onduleurs (14-1a & 14-1b, 14-2a & 14-2b) des deux unités d'onduleurs (14a, 14b) et les unités de filtrage et lissage (18) associées, situées côté sortie sont regroupées dans un module commun du dispositif à double onduleur (66), et que deux ou plusieurs dispositifs à double onduleur (66-1, 66-2) sont branchés en parallèle, sachant que les phases de sortie des unités d'onduleurs (14-1a & 14-2a, 14-1b & 14-2b) comprises dans les dispositifs à double onduleur (66) sont reliées entre elles.

9. Dispositif d'injection réseau (10) selon une des revendications précédentes, **caractérisé en ce qu'**au moins la seconde unité d'onduleur (14b) est une unité d'onduleur à 3 niveaux ou plus avec point neutre (28).

10. Dispositif d'injection réseau (10) selon une des revendications précédentes, **caractérisé en ce que** sur les premiers et/ou seconds connecteurs d'enroulement des enroulements de transformateur de puissance (38) est prévu un mécanisme de couplage (52, 54, 56) pour le découplage de l'unité d'onduleur (14) et/ou pour la connexion en étoile et/ou en triangle des connecteurs d'enroulement.

11. Dispositif d'injection réseau (10) selon une des revendications précédentes, **caractérisé en ce que** la première unité d'onduleur (14a) est reliée à une première source de courant CC (12a) et la seconde unité d'onduleur (14b) à une seconde source de courant CC (12b).

12. Système d'injection d'énergie comprenant une source de courant CC (12) et un dispositif d'injection réseau (10) selon une des revendications précitées, **caractérisé en ce que** la source de courant CC (12) est une source photovoltaïque, une source à pile à combustible, une source à accumulateur ou un générateur à commande mécanique avec redresseur.

13. Procédé pour exploiter un dispositif d'injection réseau (10) selon la revendication 1, sachant que les première et seconde unités d'onduleurs (14a, 14b) sont exploitées accordées l'une par rapport à l'autre de manière à ce que la tension appliquée sur chaque bobine primaire (38) du dispositif à transformateur (16) soit réglable sur une amplitude comprise entre 0 V et le potentiel de circuit intermédiaire CC+/CC-, **caractérisé en ce que** la première unité d'onduleur (14a) pour prescrire la polarité de la tension du réseau d'alimentation à délivrer est exploitée de manière synchrone à la fréquence de réseau, notamment à une fréquence de 50 Hz ou 60 Hz, et que la seconde unité d'onduleur (14b) est exploitée à une fréquence MLI plus élevée et accordée à la fréquence de réseau, notamment supérieure à 500 Hz, de préférence 4 kHz pour la modulation et le lissage de la tension du réseau d'alimentation à délivrer.

14. Procédé selon la revendication 13, **caractérisé en ce qu'**au moins la seconde unité d'onduleur (14b) est connectée dans au moins trois niveaux de tension pour le lissage modulé en largeur d'impulsion de la tension du réseau d'alimentation.

15. Procédé selon une des revendications 13 ou 14, **caractérisé en ce que** les unités d'onduleurs branchées en parallèle (14) sont reliées ensemble côté sortie par le biais d'une unité de filtrage et de lissage (18) pour augmenter leur performance, et exploitées de manière synchrone.

Stand der Technik

Fig. 1

Fig. 2

EP 2 815 497 B1

Fig. 3

Fig. 4

Fig. 5

Fig. 6

Fig. 7

Fig. 8

Fig. 9

EP 2 815 497 B1

Fig. 10

Fig. 11

1:1

36, 58

L1U/V/W  •          •  L1U/V/W

L2U/V/W  •          •  L2U/V/W

Fig. 12a

62

**36, 58, 60**

L1U  L1V  64  L1W
L2U  L1U  L1V  L2V  L1W  L2W
L2U  L2V  L2W

Fig. 12b

62

**36, 58. 60**

L11U  L11V  64  L11W
L12U  L11U  L11V  L11W  L12W
L21U  L12U  L12V  L12W  L21W
L22U  L21U  L21V  L21W  L22W
L21V  L11V  L12V
L22V  L12V
L21V
L22V  L22W

Fig. 12c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Flexible synchronous PWM control of cascaded inverters for photovoltaic generation. **GRIVA G.** INDUSTRIAL ELECTRONICS (ISIE) Conferene, 2010 IEEE, INTERNATIONAL SYMPOSIUM ON. IEEE, 04. Juli 2010, 832-837
- Dual inverters with synchronized PWM for grid-connected photovoltaic systems. **GRIVA G.** CLEAN ELECTRICAL POWER 2009, INTERNATIONAL CONFERENCE ON. IEE-E, 09. Juni 2009, 420-425
- Synchronously modulated cascaded neutral-clamped converters for photovoltaic application. **GRIVA G et al.** POWER ELECTRONICS ELECTRICAL DRIVES AUTOMATION AND MOTION (SPEEDAM). 2010 INTERNATIONAL SYMPOSIUM ON. IEEE, 14. Juni 2010, 809-814

- Control strategy for a multilevel inverter in grid-connected photovoltaic applications. **GABRIELE GRANDI et al.** ELECTRICAL MA-CHINES AND POWER ELECTRONICS, 2007. ACEMP '07. INTERNATIONAL AEGEAN CONFERENCE ON. IEEE, 10. September 2007, 156-161
- Dual inverter configuration for grid-connected photovoltaic generation systems. **GRANDI G. et al.** TELECOMMUNICATIONS ENERGY CONFERENCE, 2007. INTELEC 2007, 29TH INTERNATIONAL. IEEE, 30. September 2007, 880-885
- Cascaded neutral-clamped inverters with flexible synchronized PWM for photovoltaic installations. **VA-LENTIN OLESCHUK et al.** INDUSTRIAL ELECTRONICS (ISIE). 2011 IEEE, INTERNATIONAL SYMPOSIUM ON. IEEE, 27. Juni 2011, 989-993